(19) Europäisches Patentamt
European Patent Office
Office européen des brevets

(11) EP 4 207 444 A1

(12) **EUROPEAN PATENT APPLICATION**
published in accordance with Art. 153(4) EPC

(43) Date of publication:
**05.07.2023 Bulletin 2023/27**

(21) Application number: **21875844.9**

(22) Date of filing: **30.09.2021**

(51) International Patent Classification (IPC):
***H01M 50/121*** *(2021.01)* ***B32B 7/022*** *(2019.01)*
***H01G 11/78*** *(2013.01)* ***H01M 50/105*** *(2021.01)*
***H01M 50/129*** *(2021.01)*

(52) Cooperative Patent Classification (CPC):
**B32B 7/022; H01G 11/78; H01M 50/105; H01M 50/121; H01M 50/129;** Y02E 60/10

(86) International application number:
**PCT/JP2021/036343**

(87) International publication number:
**WO 2022/071548 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020166350**

(71) Applicant: **DAI NIPPON PRINTING CO., LTD.**
**Tokyo 162-8001 (JP)**

(72) Inventors:
- **HIRAKI, Kenta**
  **Tokyo 162-8001 (JP)**
- **NAKAMURA, Chihiro**
  **Tokyo 162-8001 (JP)**
- **SASAKI, Miho**
  **Tokyo 162-8001 (JP)**
- **TAKAHAGI, Atsuko**
  **Tokyo 162-8001 (JP)**

(74) Representative: **Müller-Boré & Partner Patentanwälte PartG mbB**
**Friedenheimer Brücke 21**
**80639 München (DE)**

# (54) EXTERIOR MATERIAL FOR POWER STORAGE DEVICES, METHOD FOR MANUFACTURING SAME, AND POWER STORAGE DEVICE

(57) An exterior material for power storage devices which is formed from at least a layered body comprising a base material layer, a barrier layer, and a heat-fusible resin layer in this order, wherein the base material layer contains a resin film, the resin film has a shrinkage ratio of 1.0% to less than 5.0% when immersed in hot water at 95°C for 30 minutes, and the resin film has a stress value, at 10% stretching in the tensile test described hereafter, of 100 MPa or higher in both the machine direction and the transverse direction.

(Tensile test)

After storing a sample in a 23°C, 40% RH environment for 24 hours, the tensile test is performed under conditions of a sample width of 6 mm, a gauge length of 35 mm, and a tension rate of 300 mm/min in a 23°C, 40% RH environment, and the stress value at 10% stretching (displacement of 3.5 mm) is measured.

FIG. 1

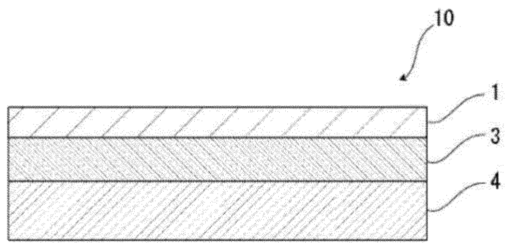




Processed by Luminess, 75001 PARIS (FR)

## Description

TECHNICAL FIELD

The present disclosure relates to an exterior material for electrical storage devices, a method for manufacturing the exterior material for electrical storage devices, and an electrical storage device.

BACKGROUND ART

Various types of electrical storage devices have been developed heretofore, and in every electrical storage device, a packaging material (exterior material) is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior materials for electrical storage devices that have often been heretofore used have the disadvantage that it is difficult to keep up with diversification in shape, and there is a limit on weight reduction.

Thus, a film-shaped exterior material with a base material layer, an aluminum foil layer and a heat-sealable resin layer laminated in this order has been heretofore proposed as an exterior material for electrical storage devices which is easily processed into diversified shapes and is capable of achieving thickness reduction and weight reduction (see, for example, Patent Document 1).

In such a film-shaped exterior material, generally, a concave portion is formed by cold molding, electrical storage device elements such as an electrode and an electrolytic solution are disposed in a space formed by the concave portion, and heat-sealable resin layers are heat-sealed to each other to obtain an electrical storage device in which electrical storage device elements are housed in an exterior material.

PRIOR ART DOCUMENT

PATENT DOCUMENT

Patent Document 1: Japanese Patent Laid-open Publication No. 2008-287971

SUMMARY OF THE INVENTION

PROBLEMS TO BE SOLVED BY THE INVENTION

For a film-shaped exterior material, it is required that a deep concave portion for housing an electrical storage device element be formed in the exterior material from the viewpoint of, for example, further increasing the energy density of an electrical storage device. However, when a film-shaped exterior material is molded to form a concave portion, there is a problem that cracks and pinholes are likely to be generated.

Further, for example, there may be cases where a base material layer is shrunk by heating in a manufacturing process of a film-shaped exterior material, and when the film is wound into an extended roll, stored, transported, then unwound, and used for manufacturing an electrical storage device, the base material layer is unwound in a curled (curved) shape, so that housing of electrical storage device elements and heat-sealing of a heat-sealable resin layer are hindered, resulting in deterioration of production efficiency of the electrical storage device.

An object of the present disclosure is to provide an exterior material for electrical storage devices which includes a laminate including at least a base material layer, a barrier layer and a heat-sealable resin layer in this order and which has excellent moldability and is less curled.

MEANS FOR SOLVING THE PROBLEM

The inventors of the present disclosure have extensively conducted studies for achieving the above-described object. As a result, the present inventors have found that when in an exterior material for electrical storage devices which includes a laminate including at least a base material layer including a resin film, a barrier layer, and a heat-sealable resin layer in this order, a shrinkage ratio of the resin film immersed in hot water at 95°C for 30 minutes is within a predetermined range, and a stress value of the resin film stretched by 10% in a predetermined tensile test is set within a predetermined range, the exterior material for electrical storage devices is less curled while exhibiting excellent moldability.

The present disclosure has been completed by further conducting studies on the basis of the above-described finding. That is, the present disclosure provides an invention of an aspect as described below.

An exterior material for electrical storage devices including a laminate including at least a base material layer, a barrier layer and a heat-sealable resin layer in this order, the base material layer including a resin film,

the resin film having a shrinkage ratio of 1.0% or more and less than 5.0% when immersed in hot water at 95°C for 30 minutes,
the resin film having a stress value of 100 MPa or more in both a machine direction and a transverse direction when stretched by 10% in the following tensile test.

(Tensile test)

A sample is stored in an environment at 23°C and 40% RH for 24 hours, a tensile test is then conducted under conditions of a sample width of 6 mm, a gauge length of 35 mm and a tension rate of 300 mm/min in an environment at 23 °C and 40% RH, and a stress value in stretching by 10% (displacement of 3.5 mm) is measured.

ADVANTAGES OF THE INVENTION

According to the present disclosure, it is possible to provide an exterior material for electrical storage devices which includes a laminate including at least a base material layer, a barrier layer and a heat-sealable resin layer in this order and which has excellent moldability and is less curled. According to the present disclosure, it is also possible to provide a method for manufacturing an exterior material for electrical storage devices, and an electrical storage device.

BRIEF DESCRIPTION OF THE DRAWINGS

Fig. 1 is a schematic diagram showing an example of a cross-sectional structure of an exterior material for electrical storage devices according to the present disclosure.
Fig. 2 is a schematic diagram showing an example of a cross-sectional structure of an exterior material for electrical storage devices according to the present disclosure.
Fig. 3 is a schematic diagram showing an example of a cross-sectional structure of an exterior material for electrical storage devices according to the present disclosure.
Fig. 4 is a schematic diagram showing an example of a cross-sectional structure of an exterior material for electrical storage devices according to the present disclosure.
Fig. 5 is a schematic diagram for illustrating a method for housing an electrical storage device element in a packaging formed from an exterior material for electrical storage devices according to the present disclosure.

EMBODIMENTS OF THE INVENTION

An exterior material for electrical storage devices according to the present disclosure includes a laminate including at least a base material layer, a barrier layer and a heat-sealable resin layer in this order, the base material layer includes a resin film, the resin film has a shrinkage ratio of 1.0% or more and less than 5.0% when immersed in hot water at 95°C for 30 minutes, and the resin film has a stress value of 100 MPa or more in both a machine direction and a transverse direction when stretched by 10% in the following tensile test. Since the exterior material for electrical storage devices according to the present disclosure has such a configuration, the exterior material for electrical storage devices has excellent moldability and is less curled.

(Tensile test)

A sample is stored in an environment at 23°C and 40% RH for 24 hours, a tensile test is then conducted under conditions of a sample width of 6 mm, a gauge length of 35 mm and a tension rate of 300 mm/min in an environment at 23 °C and 40% RH, and a stress value in stretching by 10% (displacement of 3.5 mm) is measured.

Hereinafter, the exterior material for electrical storage devices according to the present disclosure will be described in detail. In this specification, a numerical range indicated by the term "A to B" means "A or more" and "B or less". For example, the expression of "2 to 15 mm" means 2 mm or more and 15 mm or less.

In the exterior material for electrical storage devices, normally, a machine direction (MD) and a transverse

direction (TD) in the process for manufacturing thereof can be discriminated from each other for the barrier layer described later. For example, when the barrier layer includes a metal foil such as an aluminum alloy foil or a stainless steel foil, linear streaks called rolling indentations are formed on the surface of the metal foil in the rolling direction (RD) of the metal foil. Since the rolling indentations extend along the rolling direction, the rolling direction of the metal foil can be known by observing the surface of the metal foil. In the process for manufacturing of the laminate, the MD of the laminate and the RD of the metal foil normally coincides with each other, and therefore by observing the surface of the metal foil of the laminate to identify the rolling direction (RD) of the metal foil, the MD of the laminate can be identified. Since the TD of the laminate is perpendicular to the MD of the laminate, the TD of the laminate can be identified.

If the MD of the exterior material for electrical storage devices cannot be identified by the rolling indentations of the metal foil such as an aluminum alloy foil or a stainless steel foil, the MD can be identified by the following method. Examples of the method for identifying the MD of the exterior material for electrical storage devices include a method in which a cross-section of the heat-sealable resin layer of the exterior material for electrical storage devices is observed with an electron microscope to examine a sea-island structure. In the method, the direction parallel to a cross-section in which the average of the diameters of the island shapes in a direction perpendicular to the thickness direction of the heat-sealable resin layer is maximum can be determined as MD. Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, in each cross-section, the shape of each island is observed. For the shape of each island, the linear distance between the leftmost end in a direction perpendicular to the thickness direction of the heat-sealable resin layer and the rightmost end in the perpendicular direction is taken as a diameter y. In each cross-section, the average of the top 20 diameters y in descending order of the diameter y of the island shape is calculated. The direction parallel to a cross-section having the largest average of the diameters y of the island shapes is determined as MD.

## 1. Laminated Structure of Exterior Material for Electrical Storage Devices

As shown in, for example, Fig. 1, an exterior material 10 for electrical storage devices according to the present disclosure includes a laminate including a base material layer 1, a barrier layer 3 and a heat-sealable resin layer 4 in this order. In the exterior material 10 for electrical storage devices, the base material layer 1 is on the outermost layer side, and the heat-sealable resin layer 4 is an innermost layer. In construction of the electrical storage device using the exterior material 10 for electrical storage devices and electrical storage device elements, the electrical storage device elements are put in a space formed by heat-sealing the peripheral portions of heat-sealable resin layers 4 of the exterior material 10 for electrical storage devices which face each other. In the laminate forming the exterior material 10 for electrical storage devices according to the present disclosure, the heat-sealable resin layer 4 is on the inner side with respect to the barrier layer 3, and the base material layer 1 is on the outer side with respect to the barrier layer 3.

As shown in, for example, Figs. 2 to 4, the exterior material 10 for electrical storage devices may have an adhesive agent layer 2 between the base material layer 1 and the barrier layer 3 if necessary for the purpose of, for example, improving bondability between these layers. As shown in, for example, Figs. 3 and 4, an adhesive layer 5 may be present between the barrier layer 3 and the heat-sealable resin layer 4 if necessary for the purpose of, for example, improving bondability between these layers. As shown in Fig. 4, a surface coating layer 6 or the like may be provided on the outside of the base material layer 1 (on a side opposite to the heat-sealable resin layer 4 side) if necessary.

The thickness of the laminate forming the exterior material 10 for electrical storage devices is not particularly limited, and is preferably about 190 μm or less, about 155 μm or less, or about 120 μm or less, from the viewpoint of cost reduction, energy density improvement, and the like. The thickness of the laminate forming the exterior material 10 for electrical storage devices is preferably about 35 μm or more, about 45 μm or more, or about 60 μm or more, from the viewpoint of maintaining the function of an exterior material for electrical storage devices, which is protection of an electrical storage device element. The laminate forming the exterior material 10 for electrical storage devices is preferably in the range of, for example, about 35 to 190 μm, about 35 to 155 μm, about 35 to 120 μm, about 45 to 190 μm, about 45 to 155 μm, about 45 to 120 μm, about 60 to 190 μm, about 60 to 155 μm, and about 60 to 120 μm, particularly preferably about 60 to 155 μm.

In the exterior material 10 for electrical storage devices, the ratio of the total thickness of the base material layer 1, the adhesive agent layer 2 provided if necessary, the barrier layer 3, the adhesive layer 5 provided if necessary, the heat-sealable resin layer 4, and the surface coating layer 6 provided if necessary to the thickness (total thickness) of the laminate forming the exterior material 10 for electrical storage devices is preferably 90% or more, more preferably 95% or more, still more preferably 98% or more. As a specific example, when the exterior material 10 for electrical storage devices according to the present disclosure includes the base material layer 1, the adhesive agent layer 2, the barrier layer 3, the adhesive layer 5 and the heat-sealable resin layer 4, the ratio of the total thickness of these layers to the thickness (total thickness) of the laminate forming the exterior material 10 for electrical storage devices is preferably

90% or more, more preferably 95% or more, still more preferably 98% or more. In addition, when the exterior material 10 for electrical storage devices according to the present disclosure is a laminate including the base material layer 1, the adhesive agent layer 2, the barrier layer 3 and the heat-sealable resin layer 4, the ratio of the total thickness of these layers to the thickness (total thickness) of the laminate forming the exterior material 10 for electrical storage devices may be, for example, 80% or more, preferably 90% or more, more preferably 95% or more, still more preferably 98% or more.

2. Layers Forming Exterior Material for Electrical Storage Devices

[Base material layer 1]

In the present disclosure, the base material layer 1 is a layer provided for the purpose of, for example, exhibiting a function as a base material of the exterior material for electrical storage devices. The base material layer 1 is located on the outer layer side of the exterior material for electrical storage devices. The base material layer 1 may be an outermost layer (a layer forming an outer surface). For example, when a surface coating layer 6 described later is provided, the surface coating layer 6 may be an outermost layer (a layer forming an outer surface).

In the present disclosure, the base material layer 1 includes a resin film, and the resin film has a shrinkage ratio of 1.0% or more and less than 5.0% when immersed in hot water at 95°C for 30 minutes. From the viewpoint of more suitably exhibiting the effects of the present invention, the shrinkage ratio is preferably 1.5% or more, more preferably 1.8% or more. The shrinkage ratio is preferably 4.5% or less, and more preferably 4.0% or less. The shrinkage ratio is preferably in the range of about 1.0 or more and less than 5.0%, about 1.0 to 4.5%, about 1.0 to 4.0%, about 1.5 or more and less than 5%, about 1.5 to 4.5%, about 1.5 to 4.0%, about 1.8 or more and less than 5%, about 1.8 to 4.5%, or about 1.8 to 4.0%.

A specific method for the shrinkage ratio of the resin film is as follows.

(Measurement of shrinkage ratio)

The shrinkage ratio, which is a size change ratio of a resin film test piece (10 cm × 10 cm) in a stretching direction before and after immersion of the test piece in hot water at 95°C for 30 minutes, is determined from the following expression.

$$\text{Shrinkage ratio } (\%) = \{(X - Y)/X\} \times 100$$

X: Size in stretching direction before immersion treatment
Y: Size in stretching direction after immersion treatment

The shrinkage ratio of a biaxially stretched film employed as the resin film is an average value of size change ratios in the two stretching directions.

The shrinkage ratio of the resin film can be controlled by, for example, adjusting a heat fixation temperature during stretching processing.

In the present disclosure, the resin film in the base material layer 1 has a stress value of 100 MPa or more in both a machine direction and a transverse direction when stretched by 10% in the following tensile test. From the viewpoint of more suitably exhibiting the effects of the present invention, the stress value is preferably 110 MPa or more, more preferably 120 MPa or more. The stress value is preferably 180 MPa or less, more preferably 160 MPa or less, still more preferably 150 MPa or less. The stress value is preferably in the range of about 100 to 180 MPa, about 100 to 160 MPa, about 100 to 150 MPa, about 110 to 180 MPa, about 110 to 160 MPa, about 110 to 150 MPa, about 120 to 180 MPa, about 120 to 160 MPa, or about 120 to 150 MPa.

(Tensile test)

A sample is stored in an environment at 23°C and 40% RH for 24 hours, a tensile test is then conducted under conditions of a sample width of 6 mm, a gauge length of 35 mm and a tension rate of 300 mm/min in an environment at 23 °C and 40% RH, and a stress value in stretching by 10% (displacement of 3.5 mm) is measured.

When the base material layer 1 includes the resin film and the resin film satisfies the relevant stress value, the material that forms the base material layer 1 is not particularly limited as long as it has a function as a base material, i.e. at least insulation quality. The base material layer 1 can be formed using, for example, a resin, and the resin may contain additives described later. The resin film may be an unstretched film or a stretched film. Examples of the stretched

film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. The resin film is preferably a biaxially stretched film.

From the viewpoint of more suitably exhibiting the effects of the present invention, it is preferable that the resin film in the base material layer 1 has a work-hardening index of 1.6 or more and 3.0 or less in both a longitudinal direction and a width direction, and a difference in work-hardening index between the longitudinal direction and the width direction is 0.5 or less. It is preferable that the resin film has an intrinsic viscosity of 0.66 or more and 0.95 or less. It is preferable that the resin film preferably has a rigid-amorphous content of 28% or more and 60% or less. As described later, the resin film satisfying at least one of these characteristics is preferably a polyester film.

Hereinafter, more preferred characteristics of the resin film in the base material layer 1 will be described in detail.

In the present disclosure, it is preferable that the resin film in the base material layer 1 has a work-hardening index of 1.6 or more and 3.0 or less in both the longitudinal direction and the width direction. Here, the work-hardening index is a value calculated from stress at an elongation of 5% and stress at an elongation of 60%, which are obtained from a tensile test specified in a method described in the evaluation method "(10) work-hardening index" in examples described later.

The laminate used for the exterior material for electrical storage devices includes a base material layer, a barrier layer and a heat-sealable resin layer, and among these layers, the base material layer tends to be designed to have the smallest thickness. When draw molding is performed on the exterior material for electrical storage devices, the neutral axis of stress applied in the thickness direction is determined according to a work-hardened state of each layer, and a position in the thickness direction at which the stress is concentrated is determined. If the work-hardened state, i.e. the work-hardening index of the resin film is less than 1.6, the neutral axis is biased toward the barrier layer and heat-sealable resin layer side, so that stress is likely to be unevenly applied to the barrier layer. As a result, breakage or pinholes may occur in the barrier layer in draw processing. Thus, in the base material layer 1 according to the present disclosure, it is preferable that the resin film has a work-hardening index of at least 1.6 or more. From the viewpoint of preventing the neutral axis from being biased to the outermost layer side, the work-hardening index is preferably 3.0 or less in both the longitudinal direction and the width direction. The work-hardening index is more preferably 2.0 or more and 2.6 or less.

For the resin film to have a work-hardening index of 1.6 or more and 3.0 or less in both the longitudinal direction and the width direction, for example, the rupture strength of the film in each of the longitudinal direction and the width direction is preferably 200 MPa or more. Here, for the longitudinal direction and the width direction of the film, rupture strength is measured in any one direction (0°) of the film and in directions of 15°, 30°, 45°, 60°, 75°, 90°, 105°, 120°, 135°, 150° and 165° from the any one direction of the film, a direction with the highest rupture strength is taken as the width direction, and a direction orthogonal to the width direction is taken as the longitudinal direction.

For the resin film to have a rupture strength of 200 MPa or more, stretching may be performed at a high ratio during manufacturing of the resin film. Specifically, it is most preferable to perform stretching in a biaxial manner, and stretching may be performed at an area draw ratio of 11.0 or more sequentially or simultaneously by a known method. A work-hardening index of less than 1.6 leads to poor draw moldability. A higher work-hardening index tends to increase elastic deformation caused by bending during draw molding, resulting in expansion of warpage after molding. Thus, it is important to minimize the work-hardening index depending on a degree of required warpage.

From the viewpoint of more suitably exhibiting the effects of the present invention, the work-hardening index of the resin film is preferably 1.8 or more, more preferably 2.0 or more. The work-hardening index of the resin film is preferably 2.9 or less. The work-hardening index of the resin film is preferably in the range of about 1.6 to 3.0, about 1.6 to 2.9, about 1.8 to 3.0, about 1.8 to 2.9, about 2.0 to 3.0, or about 2.0 to 2.9.

In the present disclosure, from the viewpoint of in-plane uniformity, the difference in work-hardening index of resin film between the longitudinal direction and the width direction is preferably 0.5 or less. If the difference between in work-hardening index between the longitudinal direction and the width direction is more than 0.5, there is a possibility that in-plane uniformity is low, a load is unevenly applied when draw molding is performed, and local deformation occurs, leading to poor moldability. The difference in work-hardening index is more preferably 0.3 or less.

In the present disclosure, it is preferable that the rupture elongation of the resin film in at least one of the longitudinal direction and the width direction is 100% or more. One of the deformation behaviors of the material in draw processing is elongation. When the elongation of the film becomes larger, the extensional-deformability accounts for a large part of the deformation behaviors, leading to improvement of draw processability. Thus, it is preferable that the rupture elongation is 100% or more in at least one of the longitudinal direction and the width direction, and it is more preferable that the rupture elongation is 100% or more in both the longitudinal direction and the width direction. The rupture elongation in each of the longitudinal direction and the width direction can be adjusted to 100% or more when the draw ratio is 4.0 or less in both the directions. If the draw ratio is more than 4.0 in any of the directions, there is an advantage for increasing the work-hardening index, but the rupture elongation in the stretching direction may be 100% or less, resulting in deterioration of draw moldability. The rupture elongation of the resin film is preferably in the range

of about 110 to 150% in both the longitudinal direction and the width direction. The rupture elongation of the resin film is measured by the method described in the evaluation method "(6) Rupture elongation" in examples described later.

In the present disclosure, it is preferable that the resin film has a rigid-amorphous content of 28% or more and 60% or less with respect to the entire film. Here, the rigid-amorphous content is a value measured by the method described in the evaluation method "(8) Rigid-amorphous content" in examples described later. When the rigid-amorphous content is in the above-mentioned range, it is possible to obtain piercing resistance which is a particularly remarkable characteristic in the thickness direction. The draw processing performed on the exterior material for electrical storage devices is generally processing in which the material is fixed at its four corners with a mold and drawn in a thickness direction. The rigid-amorphous content with respect to the entire film is controlled to fall within the above-mentioned range, whereby excellent draw processing characteristics are exhibited in the draw processing. If the rigid-amorphous content is more than 60%, amorphous components occupy most of the film bulk configuration, so that the dimensional stability of the film is significantly deteriorated. On the other hand, if the rigid-amorphous content is less than 28%, the film is poor in piercing resistance, which is a characteristic in the thickness direction.

From the viewpoint of more suitably exhibiting the effects of the present invention, the rigid-amorphous content of the resin film is preferably 30% or more, more preferably 35% or more. The rigid-amorphous content of the resin film is preferably 58% or less, more preferably 55% or less, still more preferably 53% or less. The rigid-amorphous content of the resin film is preferably in the range of about 28 to 60%, about 28 to 58%, about 28 to 55%, about 28 to 53%, about 30 to 60%, about 30 to 58%, about 30 to 55%, about 30 to 53%, about 35 to 60%, about 35 to 58%, about 35 to 55%, or about 35 to 53%.

The film bulk state is determined by film formation conditions in addition to the crystallinity of a raw material used, and for example, when polyethylene terephthalate is used, it is important to set at least the plane orientation coefficient fn of the film to 0.165 or more for obtaining a rigid-amorphous content of 28% or more. Here, the plane orientation coefficient of the film is measured by the method described in the evaluation method "(5) Plane orientation coefficient of resin film fn" in examples described later. Examples of the method for setting the plane orientation coefficient of the film to 0.165 or more include a method in which the area draw ratio in biaxial stretching is set to 12.25 or more. In this regard, it is preferable to control the rigid-amorphous content by the heat treatment temperature after sequential biaxial stretching, and it is important that the highest temperature (heat treatment temperature) applied during film formation is 200°C or lower. On the other hand, even if the heat treatment temperature is 230°C or higher, the rigid-amorphous content tends to increase due to the start of melting of the resin, but crystallization of the film by heat is accelerated, so that the crystallinity degree described later increases, and the crystallinity degree becomes higher than that of the rigid-amorphous body as a film bulk configuration. Thus, it is important that the heat treatment temperature is 200°C or lower. If the heat treatment temperature of the film is higher than 200°C and lower than 230°C, the rigid-amorphous content may be less than 28%.

From the viewpoint of more suitably exhibiting the effects of the present invention, it is preferable that the resin film has a crystallinity degree of 15% or more and 40% or less. The crystallinity degree can be controlled by orientation crystallization by stretching or crystallization by heat to increase the mechanical strength of the film. If the crystallinity degree is less than 15%, it may be impossible to control the work-hardening index to fall within the range of the present disclosure because the film plane orientation is insufficient, and if the crystallinity degree is more than 40%, it may be impossible to set the rigid-amorphous content to fall within the range of the present disclosure. The crystallinity degree can be adjusted to 15% or more and 40% or less by, for example, setting the plane orientation coefficient of the film to 0.165 or more and 0.170 or less using a homopolyester resin, and then setting the heat treatment temperature to 150°C or higher and 200°C or lower. Other resins may be mixed. The crystallinity degree of the resin film is measured by the method described in the evaluation method "(7) Crystallinity degree" in examples described later.

From the viewpoint of more suitably exhibiting the effects of the present invention, the crystallinity degree of the resin film is preferably 16% or more, more preferably 18% or more, still more preferably 20% or more. From the viewpoint of more suitably exhibiting the effects of the present invention, the crystallinity degree of the resin film is preferably 39% or less, more preferably 35% or less, still more preferably 32% or less. The crystallinity degree of the resin film is preferably in the range of about 15 to 40%, about 15 to 39%, about 15 to 35%, about 15 to 32%, about 16 to 40%, about 16 to 39%, about 16 to 35%, about 16 to 32%, about 18 to 40%, about 18 to 39%, about 18 to 35%, about 18 to 32%, about 20 to 40%, about 20 to 39%, about 20 to 35%, or about 20 to 32%.

It is preferable that the resin film has an intrinsic viscosity of 0.66 or more and 0.95 or less. Here, the intrinsic viscosity is a value measured by the method described in the evaluation method "(4) Intrinsic viscosity" in examples described later. When the intrinsic viscosity is in the above-mentioned range, entanglement of molecular chains increases, so that it is possible to obtain deformation in the thickness direction, particularly piercing resistance. If the intrinsic viscosity is less than 0.66, it may be impossible to obtain sufficient draw processing due to insufficient entanglement of molecular chains. On the other hand, if the intrinsic viscosity is more than 0.95, the discharge amount may be required to be decreased due to an increase in filtration pressure during melt film formation, leading to poor productivity. The intrinsic viscosity can be adjusted by a raw material used for melt film formation, and when the intrinsic viscosity of the

film is to be increased, the intrinsic viscosity of the raw material used during film formation may be increased. In consideration of both the effect of entanglement of molecular chains and the productivity, the intrinsic viscosity is preferably 0.69 or more and 0.88 or less.

From the viewpoint of more suitably exhibiting the effects of the present invention, the heat shrinkage ratio at 150°C in each of the longitudinal direction and the width direction of the resin film is preferably 3.5% or more and 14.0% or less. In secondary processing where a resin film is used for the base material layer 1 and heating is performed, for example, a lamination step in which heat of about 150°C is applied, as in an extrusion lamination step where a molten resin is directly laminated to the film, the heat shrinkage ratio at 150°C is preferably 3.5% or more for suppressing creases during extrusion lamination. On the other hand, if the heat shrinkage ratio at a temperature applied during lamination is more than 14%, the film may be excessively deformed during lamination due to heat shrinkage during lamination, resulting in occurrence of problems. From the viewpoint of creases and heat deformation during lamination, it is preferable that the resin film has a heat shrinkage ratio of 10% or less at 150°C in the longitudinal direction and the width direction. The heat shrinkage ratio at in each of the longitudinal direction and the width direction at 150°C can be controlled to be 3.5% or more and 14.0% or less by setting the area ratio of the film to 12.25 or more, and then performing heat treatment at a heat treatment temperature of 160°C or higher and 200°C or lower. The heat shrinkage ratio of the resin film in each of the longitudinal direction and the width direction at 150°C is measured by the method described in "(11) Heat shrinkage ratio of the resin film in longitudinal direction and width direction of resin film at 150°C" in examples described later.

From the viewpoint of more suitably exhibiting the effects of the present invention, it is preferable that the resin film has a melt point (melting endothermic peak temperature (Tm)) of 235°C or higher as determined with a differential scanning calorimeter. When the resin film is used for the base material layer of the exterior material for electrical storage devices, the heat-sealable resin layers are heat-sealed to each other to form a container. Thus, it is necessary to inhibit the exterior material from being melted by heat in heat-sealing. If the melt endothermic peak temperature Tm is lower than 235°C, it is necessary to lower the heating temperature when heat-sealing is performed, and the time required to form a container by heat-sealing may increase, resulting in poor mass productivity. For setting the melt endothermic peak temperature Tm to 235°C or higher, it is most preferable to use homopolyester. From the viewpoint of processability of the resin film, the melting point is preferably 320°C or lower. The melting point of the resin film is measured by the method described in the evaluation method "(9) Glass transition temperature Tg and melting point (melt endothermic peak temperature Tm)" in examples described later.

From the viewpoint of more suitably exhibiting the effects of the present invention, the melting point of the resin film is preferably 238°C or higher, more preferably 240°C or higher, still more preferably 245°C or higher. The melting point of the resin film is preferably 300°C or lower, more preferably 290°C or lower, still more preferably 270°C or lower. The melting point of the polyester film is preferably in the range of about 235 to 320°C, about 235 to 300°C, about 235 to 290°C, about 235 to 270°C, about 238 to 320°C, about 238 to 300°C, about 238 to 290°C, about 238 to 270°C, about 240 to 320°C, about 240 to 300°C, about 240 to 290°C, about 240 to 270°C, about 245 to 320°C, about 245 to 300°C, about 245 to 290°C, or about 245 to 270°C.

In the present disclosure, among the resin films in the base material layer 1, a polyester film is particularly preferable. The polyester film is formed with polyester as a main component. The polyester is a generic term of polymer compounds in which a main bond in a main chain is an ester bond. The polyester can be normally obtained by polycondensation reaction of a dicarboxylic acid or a derivative thereof and a diol or a derivative thereof, and it is possible to obtain electrolytic solution resistance by formation with polyester as a main component. Term "formation with polyester as a main component" in the present disclosure refers to occupying 60 mass% or more and 100 mass% or less of an object as a whole, with the object being a polyester film here. Here, the dicarboxylic acid unit (structural unit) or the diol unit (structural unit) means a divalent organic group after the elimination of a moiety removed by polycondensation, and is represented by the following general formula. Dicarboxylic acid unit (structural unit):

-CO-R-CO-

Diol unit (structural unit):

-O-R'-O-

wherein each of R and R' is a divalent organic group; and R and R' may be the same or different).

Examples of the diol or derivative thereof that gives the polyester include ethylene glycol, aliphatic dihydroxy compounds such as 1,2-propanediol, 1,3-propanediol, 1,3-butanediol, 1,5-pentanediol, 1,6-hexanediol and neopentyl glycol, polyoxyalkylene glycols such as diethylene glycol, polyethylene glycol, polypropylene glycol and polytetramethylene glycol, alicyclic dihydroxy compounds such as 1,4-cyclohexanedimethanol and spiroglycol, aromatic dihydroxy compounds such as bisphenol A and bisphenol S, and derivatives thereof.

Examples of the dicarboxylic acid or derivative thereof that gives the polyester include terephthalic acid, aromatic

dicarboxylic acids such as isophthalic acid, phthalic acid, 2,6-naphthalenedicarboxylic acid, diphenyldicarboxylic acid, diphenylsulfonedicarboxylic acid, diphenoxyethanedicarboxylic acid and 5-sodium sulfonedicarboxylic acid, aliphatic dicarboxylic acids such as oxalic acid, succinic acid, adipic acid, sebacic acid, dimer acid, maleic acid and fumaric acid, alicyclic dicarboxylic acids such as 1,4-cyclohexanedicarboxylic acid, oxycarboxylic acids such as paraoxybenzoic acid, and derivatives thereof. Examples of the derivative of dicarboxylic acid include esterified products such as dimethyl terephthalate, diethyl terephthalate, 2-hydroxyethyl methyl terephthalate, dimethyl 2,6-naphthalenedicarboxylate, dimethyl isophthalate, dimethyl adipate, diethyl maleate, and dimer acid dimethyl.

The resin film may have a single layer configuration or a multiple layer configuration of two or more layers. In the case of a multiple layer configuration, a symmetrical configuration with a central layer as a reference point, such as layer B/layer A/layer B, is preferable from the viewpoint of suppressing warpage after film formation. Occurrence of warpage after film formation may deteriorate handleability in a subsequent battery manufacturing process or the like. In the present disclosure, a five layer configuration such as B/A/B/A/B may be employed. In the case of a multiple layer structure, the three layer laminated configuration of B/A/B is preferable from the viewpoint of warpage after film formation. In the present disclosure, in the case of a two layer configuration such as layer A/layer B, where the two layers have different molecular orientations, warpage may occur immediately after film formation. However, as long as the effects of the present invention are not impaired, an asymmetric configuration such as a two layer configuration of A/B may be employed.

The dynamic friction coefficient μd of the die-side contact surface of the resin film is preferably 0.3 or less for improving drawability. When the dynamic friction coefficient is in the above-described range, deformation resistance at the time of drawing decreases, leading to improvement of processability. The dynamic friction coefficient of the resin film is measured by the method described in the evaluation method "(12) Dynamic friction coefficient of resin film" in examples described later. The method for setting the dynamic friction coefficient to 0.3 or less is not particularly limited, and for example, it is preferable that a layer containing inorganic particles having an average particle diameter of 0.005 μm or more and 10 μm or less and/or organic particles at 0.3 mass% or more and 5 mass% or less is provided as an outermost layer. The amount of the particles is more preferably 0.5 mass% or more and 3 mass% or less. However, if the particles are excessively added, the rupture elongation of the exterior material may be reduced. For this reason, it is important to add the particles within the bounds of not hindering the effects of the present invention. In the present disclosure, particles having an average primary particle diameter of 0.005 μm or more are used. The particle diameter here refers to a number average particle diameter, and means a particle diameter observed in the cross-section of the film. When the shape is not a perfect circle, a particle diameter of a perfect circle having the same area is calculated, and the thus-obtained value is taken as the relevant particle diameter. Here, the number average particle diameter Dn can be determined by the following procedures (1) to (4).

(1) First, by using a microtome, a film cross-section is cut without being crushed in the thickness direction, and an enlarged observation image is obtained with a scanning electron microscope. Here, the cutting is performed in a direction parallel to the film transverse direction (lateral direction).

(2) Subsequently, a cross-section area S of each particle observed in the cross-section in the image is determined, and the particle diameter d is determined from the following expression:

$$d = 2 \times (S/\pi)^{1/2}$$

(3) By using the obtained particle diameter d and the number n of resin particles, Dn is determined from the following expression:

$$Dn = \Sigma d/n$$

wherein Σd is a sum of the particle diameters of the particles in the observation plane, and n is the total number of particles in the observation plane.

(4) The procedures (1) to (3) are carried out at five different positions, and the average value of the obtained particle diameters is taken as a number average particle diameter of the particles. The above-described evaluation is performed in a region of 2500 $\mu m^2$ or more per observation point.

For the inorganic particle, for example, wet and dry silica, colloidal silica, aluminum silicate, titanium oxide, calcium carbonate, calcium phosphate, barium sulfate, aluminum oxide, mica, kaolin, clay and the like can be used. As the organic particle, particles containing styrene, silicone, acrylic acid, methacrylic acid, polyester, a divinyl compounds or the like as a constituent component can be used. In particular, it is preferable to use inorganic particles of wet and

dry silica, alumina and calcium carbonate, and particles containing styrene, silicone, acrylic acid, methacrylic acid, polyester, divinylbenzene or the like as a constituent component. Further, two or more types of the inorganic particles and organic particles may be used in combination. It is also preferable to subject a film surface to roughening processing such as embossing or sandblasting for controlling the maximum surface height.

The thickness of the resin film is preferably 9 μm or more and 30 μm or less from the viewpoint of molding followability and warpage after molding when the resin film is used for the base material layer of the exterior material for electrical storage devices. The thickness of the resin film is most preferably 12 μm or more and 28 μm or less. Depending on a required draw depth, a thickness of less than 9 μm may lead to poor moldability, and a thickness of more than 30 μm may increase rigidity, resulting in occurrence of warpage after molding.

It is also preferable that the resin film is subjected to surface treatment such as corona treatment, plasma treatment, ozone treatment or provision of an anchor coat layer for improving bondability to the adhesive layer. Examples of the method for forming an anchor coat layer include methods in which a film surface is coated with a resin (e.g. a composite melt extrusion method, a hot melt coating method, or a method of in-line or off-line coating from a solvent other than water and a water-soluble and/or water-dispersible resins). In particular, from the viewpoint of uniform film formation and productivity, an in-line coating method is preferable in which a film coating agent is applied to one surface of the film before completion of orientation crystallization, the film is stretched in at least one direction, and heat-treated to complete orientation crystallization. When an anchor coat layer is provided, the resin is not particularly limited, and for example, acryl-based resins, urethane-based resins, polyester-based resins, olefin-based resins, fluorine-based resins, vinyl-based resins, chlorine-based resins, styrene-based resins, various graft-based resins, epoxy-based resins, silicone-based resins and the like can be used, or mixtures of these resins can also be used. From the viewpoint of adhesion, it is preferable to use a polyester-based resin, an acryl-based resin or a urethane-based resin. When a polyester-based resin is used as an aqueous coating liquid, a water-soluble or water-dispersible polyester resin is used. For obtaining such water solubility or water dispersibility, it is preferable to copolymerize a compound containing a sulfonate group or a compound containing a carboxylate group. When an acrylic resin is used as an aqueous coating liquid, the acrylic resin is required to be dissolved or dispersed in water, and a surfactant may be used as an emulsifier (examples thereof include, but are not limited to, polyether-based compounds). For the anchor coat layer, various crosslinking agents can be used in combination with the resin for further improving bondability. As the crosslinking agent resin, melamine-based resins, epoxy-based resins and oxazoline-based resins are generally used.

In the present disclosure, the base material layer 1 may include at least one resin film having the characteristics described above, and may include another layer. The material that forms the other is not particularly limited as long as it has a function as a base material, i.e. at least insulation quality. The other layer can be formed using, for example, a resin, and the resin may contain additives described later.

The other layer may be, for example, a resin film formed of a resin, or may be formed by applying a resin. In the other layer, the resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the other layer include resins such as polyamide, polyolefin, epoxy resin, acrylic resin, fluororesin, polyurethane, silicone resin and phenol resin, and modified products of these resins. The resin that forms the other layer may be a copolymer of these resins or a modified product of the copolymer. Further, a mixture of these resins may be used.

Of these resins, polyamide is preferable as a resin that form the other layer. For example, when the base material layer 1 according to the present disclosure includes a polyester film having the above-described characteristics and another layer, the base material layer 1 is preferably a laminate of a polyester film and a polyamide film.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The polyamide film is preferably a stretched polyamide film, more preferably a stretched nylon film, still more preferably a biaxially stretched nylon film.

When the base material layer 1 includes two or more layers, the base material layer 1 may be a laminate

obtained by laminating the films with an adhesive or the like, or a film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1.

Since the polyester is hardly discolored even in the case where for example, an electrolytic solution is deposited on the surface, it is preferable that the polyester film is located at the outermost layer of the base material layer 1 when the base material layer 1 is a resin film laminate with two or more layers.

When the base material layer 1 is a resin film laminate with two or more layers, the two or more resin films may be laminated with an adhesive interposed therebetween. When the base material layer 1 is a resin film laminate with two or more layers, at least one layer may have the main axis orientation. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 μm. As described for the resin film, the lamination may be performed with an anchor coat layer formed on the resin film used for the base material layer. Examples of the anchor coat layer include the same adhesives as those exemplified for the adhesive agent layer 2 described later. Here, the thickness of the anchor coat layer is, for example, about 0.01 to 1.0 μm

Additives such as a slipping agent, a flame retardant, an antiblocking agent, an antioxidant, a light stabilizer, a tackifier and an antistatic agent may be present on at least one of the surface of the base material layer 1 and/or inside the base material layer 1. The additives may be used alone, or may be used in combination of two or more thereof.

In the present disclosure, it is preferable that a slipping agent is present on the surface of the base material layer 1 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof.

When the slipping agent is present on the surface of the base material layer 1, the amount of the slipping agent present is not particularly limited, and is preferably about 3 $mg/m^2$ or more, more preferably about 4 to 15 $mg/m^2$, still more preferably about 5 to 14 $mg/m^2$.

The slipping agent present on the surface of the base material layer 1 may be one obtained by exuding the slipping agent contained in the resin forming the base material layer 1, or one obtained by applying the slipping agent to the surface of the base material layer 1.

The thickness of the base material layer 1 is not particularly limited as long as a function as a base material is exhibited, and is preferably about 10 μm or more, more preferably about 15 μm or more, from the viewpoint of more suitably exhibiting the effects of the invention of the present disclosure. From the same view point, the thickness is preferably about 60 μm or less, more preferably about 50 μm or less, still more preferably about 40 μm or less, even more preferably about 30 μm or less, even more preferably about 28 μm or less, even more preferably about 25 μm or less. The thickness of the base material layer 1 is preferably in the range of about 10 to 60 μm, about 10 to 50 μm, about 10 to 40 μm, about 10 to 30 μm, about 10 to 28 μm, about 10 to 25 μm, about 15 to 60 μm, about 15 to 50 μm, about 15 to 40 μm, about 15 to 30 μm, about 15 to 28 μm, or about 15 to 25 μm. When the base material layer 1 is a resin film laminate with two or more layers, the thickness of the resin film forming each layer is preferably about 2 to 25 μm.

[Adhesive agent layer 2]

In the exterior material for electrical storage devices of the present disclosure, the adhesive agent layer 2 is a layer provided between the base material layer 1 and the barrier layer 3 if necessary for the purpose of enhancing bondability between these layers.

The adhesive agent layer 2 is formed from an adhesive capable of bonding the base material layer 1 and the barrier layer 3. The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a first component containing a polyol compound and a second component containing an isocyanate compound. The polyurethane adhesive is preferably a two-liquid curable polyurethane adhesive having polyol such as polyester polyol, polyether polyol or acrylic polyol as a first component, and aromatic or aliphatic polyisocyanate as a second component. Examples of the polyurethane adhesive include polyurethane adhesives containing an isocyanate compound and a polyurethane compound obtained by reacting a polyol compound with an isocyanate compound in advance. Examples of the polyurethane adhesive include polyurethane adhesives containing a polyol compound and a polyurethane compound obtained by reacting a polyol compound with an isocyanate compound in advance. Examples of the polyurethane adhesive include polyurethane adhesives obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. Since the adhesive agent layer 2 is formed of a polyurethane adhesive, excellent electrolytic solution resistance is imparted to the exterior material for electrical storage devices, so that peeling of the base material layer 1 is suppressed even if the electrolytic solution is deposited on the side surface.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices.

The average particle diameter of the pigment is not particularly limited, and is, for example, about 0.05 to 5 μm, preferably about 0.08 to 2 μm. The average particle size of the pigment is a median diameter measured by a laser

diffraction/scattering particle size distribution measuring apparatus.

The content of the pigment in the adhesive agent layer 2 is not particularly limited as long as the exterior material for electrical storage devices is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and the thickness is, for example, about 1 μm or more, or about 2 μm or more. The thickness of the adhesive agent layer 2 is, for example, about 10 μm or less, or about 5 μm or less. The thickness of the adhesive agent layer 2 is preferably in the range of about 1 to 10 μm, about 1 to 5 μm, about 2 to 10 μm, or about 2 to 5 μm

[Colored Layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided outside the base material layer 1. By providing the colored layer, the exterior material for electrical storage devices can be colored.

The colored layer can be formed by, for example, applying an ink containing a colorant to the surface of the base material layer 1, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive Agent Layer 2].

[Barrier layer 3]

In the exterior material for electrical storage devices, the barrier layer 3 is a layer which suppresses at least ingress of moisture.

Examples of the barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 3 include resin films provided with at least one of these deposited films and resin layers. A plurality of barrier layers 3 may be provided. Preferably, the barrier layer 3 contains a layer formed of a metal material. Specific examples of the metal material forming the barrier layer 3 include aluminum alloys, stainless steel, titanium steel and steel. When the metal material is used as a metal foil, it is preferable that the metal material includes at least one of an aluminum alloy foil and a stainless steel foil.

The aluminum alloy is more preferably a soft aluminum alloy foil formed of, for example, an annealed aluminum alloy from the viewpoint of improving the moldability of the exterior material for electrical storage devices, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain an exterior material for electrical storage devices which has more excellent moldability. When the content of iron is 9.0 mass% or less, it is possible to obtain an exterior material for electrical storage devices which is more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferntic stainless steel foils, martensitic stainless steel foils and precipitation-hardened stainless steel foils. From the viewpoint of providing an exterior material for electrical storage devices which is further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the barrier layer 3 is a metal foil, the barrier layer 3 may perform a function as a barrier layer suppressing at least ingress of moisture, and has a thickness of, for example, about 9 to 200 μm. The thickness of the barrier layer 3 is preferably 100 μm or less, more preferably about 85 μm or less. The thickness of the barrier layer 3 is preferably about 25 μm or more, more preferably 30 μm or more. The thickness of the barrier layer 3 is preferably in the range of about 25 to 100 μm, about 25 to 85 μm, about 30 to 100 μm, or about 30 to 85 μm. When the barrier layer 3 is formed of an aluminum alloy foil, the thickness thereof is especially preferably in above-described range. In particular, when the

barrier layer 3 includes a stainless steel foil, the thickness of the stainless steel foil is preferably about 60 μm or less, more preferably about 50 μm or less, still more preferably about 40 μm or less, even more preferably about 30 μm or less, particularly preferably about 25 μm or less. The thickness of the stainless steel foil is preferably about 10 μm or more, more preferably about 15 μm or more. The thickness of the stainless steel foil is preferably in the range of about 10 to 60 μm, about 10 to 50 μm, about 10 to 40 μm, about 10 to 30 μm, about 10 to 25 μm, about 15 to 60 μm, about 15 to 50 μm, about 15 to 40 μm, about 15 to 30 μm, or about 15 to 25 μm.

When the barrier layer 3 is a metal foil, it is preferable that a corrosion-resistant film is provided at least on a surface on a side opposite to the base material layer for preventing dissolution and corrosion. The barrier layer 3 may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer. Specifically, the corrosion-resistant film means a film which improves the acid resistance of the barrier layer (acid-resistant film), a film which improves the alkali resistance of the barrier layer (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 3 is provided with the corrosion-resistant film, the barrier layer 3 is regarded as including the corrosion-resistant film.

The corrosion-resistant film exhibits the effects of preventing delamination between the barrier layer (e.g. an aluminum alloy foil) and the base material layer during molding of the exterior material for electrical storage devices; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

[Chemical Formula 1]

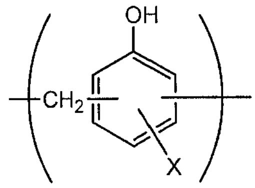

(1)

[Chemical Formula 2]

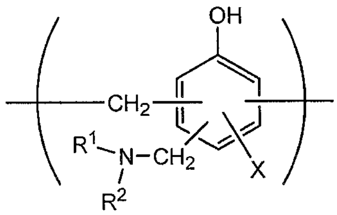

(2)

[Chemical Formula 3]

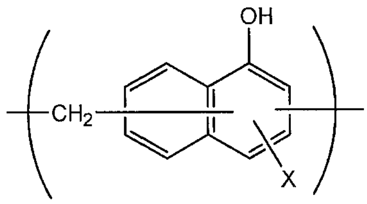

(3)

[Chemical Formula 4]

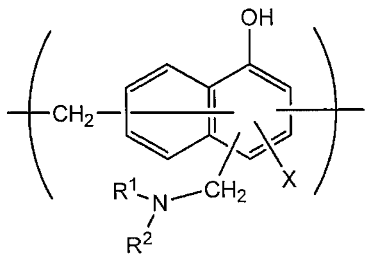

(4)

In the general formulae (1) to (4), X represents a hydrogen atom, a hydroxy group, an alkyl group, a hydroxyalkyl group, an allyl group, or a benzyl group. $R^1$ and $R^2$ are the same or different, and each represents a hydroxy group, an alkyl group, or a hydroxyalkyl group. In the general formulae (1) to (4), examples of the alkyl group represented by X, $R^1$ and $R^2$ include linear or branched alkyl groups with a carbon number of 1 to 4, such as a methyl group, an ethyl group, an n-propyl group, an isopropyl group, an n-butyl group, an isobutyl group, and a tert-butyl group. Examples of the hydroxyalkyl group represented by X, R1 and R2 include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, R1 and R2 may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to prepare a polymer including repeating units represented by the general formula (1) or the general formula (3), and then

introducing a functional group ($-CH_2NR^1R^2$) into the obtained polymer using formaldehyde and an amine ($R^1R^2NH$). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate.

Examples of the corrosion-resistant film include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the barrier layer 3 in the chemical conversion treatment is not particularly limited, but for example when the coating-type chromate treatment is performed, and it is desirable that the chromic acid compound be contained in an amount of, for example, about 0.5 to 50 mg, preferably about 1.0 to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 to 150 mg, per 1 $m^2$ of the surface of the barrier layer 3.

The thickness of the corrosion-resistant film is not particularly limited, and is preferably about 1 nm to 20 $\mu$m, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of $Ce_2PO_4^+$, $CePO_4^-$ and the like) and secondary ions from, for example, Cr, P and O (e.g. at least one of $CrPO_2^+$, $CrPO_4^-$ and the like) are detected.

The chemical conversion treatment is performed in the following manner: a solution containing a compound to be used for formation of a corrosion-resistant film is applied to the surface of the barrier layer by a bar coating method, a roll coating method, a gravure coating method, an immersion method or the like, and heating is then performed so that the temperature of the barrier layer is about 70 to about 200°C. The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

[Heat-sealable resin layer 4]

In the exterior material for electrical storage devices according to the present disclosure, the heat-sealable

resin layer 4 is a layer (sealant layer) which corresponds to an innermost layer and performs a function of hermetically sealing the electrical storage device element by heat-sealing the heat-sealable resin layer during construction of the electrical storage device.

The resin forming the heat-sealable resin layer 4 is not particularly limited as long as it can be heat-sealed, and examples thereof include polyolefins such as homo- or block-type polypropylene, resins containing a polyolefin backbone such as cyclic polyolefins, polyesters such as polyethylene terephthalate and polybutylene terephthalate, polyacetal, acrylic resins, polymethylpentene and copolymers thereof with α-olefins, nylon 6, nylon 66, polyvinylidene chloride, polyphenylene sulfide, acetyl cellulose, fluorine-based resins such as ETFE, PCTFE, PFA and FEP, and resins obtained by modifying any of the foregoing resins with maleic anhydride or acrylic acid (e.g. acid-modified polyolefins). One, or two or more of these resins may be used. The resin forming the heat-sealable resin layer 4 can be confirmed to contain a polyolefin backbone by an analysis method such as infrared spectroscopy or gas chromatography-mass spectrometry. It is preferable that a peak derived from maleic anhydride is detected when the resin forming the heat-sealable resin layer 4 is analyzed by infrared spectroscopy. For example, when a maleic anhydride-modified polyolefin is measured by infrared spectroscopy, peaks derived from maleic anhydride are detected near wavenumbers of 1760 $cm^{-1}$ and 1780 $cm^{-1}$. When the heat-sealable resin layer 4 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is more preferable.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

Since the heat-sealable resin layer 4 is formed of, among above-described resins, a resin obtained by modifying block-type polypropylene with maleic anhydride, a resin obtained by modifying polymethylpentene or a copolymer thereof with α-olefin with maleic anhydride, a resin obtained by modifying a cyclic polyolefin with maleic anhydride, a fluorine-based resin such as ETFE, PCTFE, PFA or FEP, polyethylene terephthalate, polybutylene terephthalate, or the like, the exterior material 10 for electrical storage devices can exhibit high sealing strength in a high-temperature environment when applied to an application in which heat resistance is required, such as a battery that is used at a high temperature (e.g. 80°C or higher). Polyethylene terephthalate and polybutylene terephthalate may be stretched or unstretched, and may contain an elastomer.

It is preferable that the polybutylene terephthalate film contains an elastomer in addition to polybutylene terephthalate. The elastomer is one that serves to enhance the flexibility of the polybutylene terephthalate film while securing the durability of the polybutylene terephthalate film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, polyether-based elastomers,

and acryl-based elastomers, or a thermoplastic elastomer which is a copolymer of any of the foregoing elastomers. The elastomer is more preferably a thermoplastic elastomer including a block copolymer of polybutylene terephthalate and polyether, and a thermoplastic elastomer including an α-olefin copolymer of polymethylpentene. In the heat-sealable resin layer 4, the content of the elastomer is not particularly limited as long as the flexibility of the heat-sealable resin layer 4 can be enhanced while excellent heat resistance and sealability thereof are secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The heat-sealable resin layer 4 may be formed from one resin alone, or may be formed from a blend polymer obtained by combining two or more resins. Further, the heat-sealable resin layer 4 may be composed of only one layer, or may be composed of two or more layers with the same resin component or different resin components.

The heat-sealable resin layer 4 may contain a slipping agent etc. if necessary. When the heat-sealable resin layer 4 contains a slipping agent, the moldability of the exterior material for electrical storage devices can be improved. The slipping agent is not particularly limited, and a known slipping agent can be used. The slipping agents may be used alone, or may be used in combination of two or more thereof.

The slipping agent is not particularly limited, and is preferably an amide-based slipping agent. Specific examples of the slipping agent include those exemplified for the base material layer 1. The slipping agents may be used alone, or may be used in combination of two or more thereof.

When a slipping agent is present on the surface of the heat-sealable resin layer 4, the amount of the slipping agent present is not particularly limited, and is preferably about 10 to 50 $mg/m^2$, more preferably about 15 to 40 $mg/m^2$ from the viewpoint of improving the moldability of the exterior material for electrical storage devices.

The slipping agent present on the surface of the heat-sealable resin layer 4 may be one obtained by exuding the slipping agent contained in the resin forming the heat-sealable resin layer 4, or one obtained by applying a slipping agent to the surface of the heat-sealable resin layer 4.

The thickness of the heat-sealable resin layer 4 is not particularly limited as long as the heat-sealable resin layers are heat-sealed to each other to perform a function of sealing the electrical storage device element, and the thickness is, for example, about 100 μm or less, preferably about 85 μm or less, more preferably about 15 to 85 μm. For example, when the thickness of the adhesive layer 5 described later is 10 μm or more, the thickness of the heat-sealable resin layer 4 is preferably about 85 μm or less, more preferably about 15 to 45 μm. For example, when the thickness of the adhesive layer 5 described later is less than 10 μm or the adhesive layer 5 is not provided, the thickness of the heat-sealable resin layer 4 is preferably about 20 μm or more, more preferably about 35 to 85 μm.

[Adhesive Layer 5]

In the exterior material for electrical storage devices according to the present disclosure, the adhesive layer 5 is a layer provided between the barrier layer 3 (or corrosion-resistant film) and the heat-sealable resin layer 4 if necessary for firmly bonding these layers to each other.

The adhesive layer 5 is formed from a resin capable of bonding the barrier layer 3 and the heat-sealable resin layer 4 to each other. The resin to be used for forming the adhesive layer 5 is, for example, the same as that of the adhesive exemplified for the adhesive agent layer 2. From the viewpoint of firmly bonding the adhesive layer 5 to the heat-sealable resin layer 4, it is preferable that the resin to be used for forming the adhesive layer 5 contains a polyolefin backbone. Examples thereof include the polyolefins and acid-modified polyolefins exemplified for the heat-sealable resin layer 4 described above. On the other hand, from the viewpoint of firmly bonding the barrier layer 3 and the adhesive layer 5 to each other, it is preferable that the adhesive layer 5 contains an acid-modified polyolefin. Examples of the acid modifying component include dicarboxylic acids such as maleic acid, itaconic acid, succinic acid and adipic acid, anhydrides thereof, acrylic acid, and methacrylic acid, and maleic anhydride is most preferable from the viewpoint of ease of modification, general-purpose property, and the like. From the viewpoint of the heat resistance of the exterior material for electrical storage devices, the olefin component is preferably a polypropylene-based resin, and it is most preferable that the adhesive layer 5 contains maleic anhydride-modified polypropylene.

The resin forming the adhesive layer 5 can be confirmed to contain a polyolefin backbone by an analysis method such as infrared spectroscopy, gas chromatography-mass spectrometry, and the analysis method is not particularly limited. The resin forming the adhesive layer 5 is confirmed to contain an acid-modified polyolefin, for example, when peaks derived from maleic anhydride are detected near wavenumbers of 1760 $cm^{-1}$ and 1780 $cm^{-1}$ when a maleic anhydride-modified polyolefin is measured by infrared spectroscopy. However, if the degree of acid modification is low, the peaks may be too small to be detected. In that case, the peaks can be analyzed by nuclear magnetic resonance

spectroscopy.

Further, from the viewpoint of securing durability, such as heat resistance and content resistance and securing moldability, of the exterior material for electrical storage devices while reducing the thickness, the adhesive layer 5 is more preferably a cured product of a resin composition containing an acid-modified polyolefin and a curing agent. Preferred examples of the acid-modified polyolefin include those described above.

The adhesive layer 5 is preferably a cured product of a resin composition containing an acid-modified polyolefin and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group. Preferably, the adhesive layer 5 preferably contains at least one selected from the group consisting of polyurethane, polyester and epoxy resin. More preferably, the adhesive layer 5 contains polyurethane and epoxy resin. As the polyester, for example, an ester resin produced by reaction of an epoxy group with a maleic anhydride group, or an amide ester resin produced by reaction of an oxazoline group with a maleic anhydride group is preferable. When an unreacted substance of a curing agent, such as a compound having an isocyanate group, a compound having an oxazoline group, or an epoxy resin remains in the adhesive layer 5, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the first present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may

be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5 in an atmosphere including a component which induces corrosion of the barrier layer, such as an electrolytic solution.

When the adhesive layer 5 is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 5 may contain a modifier having a carbodiimide group.

The thickness of the adhesive layer 5 is preferably about 50 μm or less, about 40 μm or less, about 30 μm or less, about 20 μm or less, or about 5 μm or less. The thickness of the adhesive layer 5 is preferably about 0.1 μm or more, or about 0.5 μm or more. The thickness of the adhesive layer 5 is preferably in the range of about 0.1 to 50 μm, about 0.1 to 40 μm, about 0.1 to 30 μm, about 0.1 to 20 μm, about 0.1 to 5 μm, about 0.5 to 50 μm, about 0.5 to 40 μm, about 0.5 to 30 μm, about 0.5 to 20 μm, or about 0.5 to 5 μm. More specifically, the thickness is preferably about 1 to 10 μm, more preferably about 1 to 5 μm in the case of the adhesive exemplified for the adhesive agent layer 2 or a cured product of an acid-modified polyolefin with a curing agent. When any of the resins exemplified for the heat-sealable resin layer 4 is used, the thickness of the adhesive layer is preferably about 2 to 50 μm, more preferably about 10 to 40 μm. When the adhesive layer 5 is a cured product of a resin composition containing the adhesive exemplified for the adhesive agent layer 2 or an acid-modified polyolefin and a curing agent, the adhesive layer 5 can be formed by, for example, applying the resin composition and curing the resin composition by heating or the like. When the resin exemplified for the heat-sealable resin layer 4 is used, for example, extrusion molding of the heat-sealable resin layer 4 and the adhesive layer 5 can be performed.

[Surface Coating Layer 6]

The exterior material for electrical storage devices according to the present disclosure may include a surface coating layer 6 on the base material layer 1 (on a side opposite to the barrier layer 3 from the base material layer 1) if necessary for the purpose of improving at least one of designability, electrolytic solution resistance, scratch resistance, moldability and the like. The surface coating layer 6 is a layer located on the outermost layer side of the exterior material for electrical storage devices when the power storage device is constructed using the exterior material for electrical storage devices.

The surface coating layer 6 can be formed from, for example, a resin such as polyvinylidene chloride, polyester, polyurethane, acrylic resin or epoxy resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a first component containing a polyol compound and a second component containing an isocyanate compound. The polyurethane is preferably a two-liquid curable polyurethane adhesive having polyol such as polyester polyol, polyether polyol or acrylic polyol as a first component, and aromatic or aliphatic polyisocyanate as a second component. Examples of the polyurethane include polyurethane containing an isocyanate compound and a polyurethane compound obtained by reacting a polyol compound with an isocyanate compound in advance. Examples of the polyurethane include polyurethane containing a polyurethane compound and a polyurethane compound obtained by reacting a polyol compound with an isocyanate compound in advance. Examples of the polyurethane include polyurethane obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. The aliphatic isocyanate-based compound is an isocyanate having an aliphatic group and having no aromatic ring, the alicyclic isocyanate-based compound is an isocyanate having an alicyclic hydrocarbon group, and the aromatic isocyanate-based compound is an isocyanate having an aromatic ring. Since the surface coating layer 6 is formed of polyurethane, excellent electrolytic solution resistance is imparted to the exterior material for electrical storage devices.

If necessary, the surface coating layer 6 may contain additives such as the slipping agent, an anti-blocking agent, a matting agent, a flame retardant, an antioxidant, a tackifier and an anti-static agent on at least one of the surface and the inside of the surface coating layer 6 according to the functionality and the like to be imparted to the surface coating layer 6 and the surface thereof. The additives are in the form of, for example, fine particles having an average particle diameter of about 0.5 nm to 5 μm.The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

The thickness of the surface coating layer 6 is not particularly limited as long as the above-mentioned function as the surface coating layer 6 is performed, and it is, for example, about 0.5 to 10 μm, preferably about 1 to 5 μm.

## 3. Method for manufacturing Exterior Material for Electrical Storage Devices

The method for manufacturing an exterior material for electrical storage devices is not particularly limited as long as a laminate is obtained in which the layers of the exterior material for electrical storage devices of the present disclosure are laminated. Examples thereof include a method including the step of laminating at least the base material layer 1, the barrier layer 3 and the heat-sealable resin layer 4 in this order. The method for manufacturing the exterior material 10 for electrical storage devices of the present disclosure includes a laminate including at least a base material layer, a barrier layer and a heat-sealable resin layer in this order, the base material layer includes a resin film, the resin film has a shrinkage ratio of 1.0% or more and less than 5.0% when immersed in hot water at 95°C for 30 minutes, and the resin film has a stress value of 100 MPa or more in both a machine direction and a transverse direction when stretched by 10% in the following tensile test.

(Tensile test)

After storing a sample in a 23°C, 40% RH environment for 24 hours, the tensile test is performed under conditions of a sample width of 6 mm, a gauge length of 35 mm, and a tension rate of 300 mm/min in a 23°C, 40% RH environment, and the stress value at 10% stretching (displacement of 3.5 mm) is measured.

An example of the method for manufacturing the exterior material for electrical storage devices of the present disclosure is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Then, the heat-sealable resin layer 4 is laminated on the barrier layer 3 of the laminate A. When the heat-sealable resin layer 4 is laminated directly on the barrier layer 3, the heat-sealable resin layer 4 may be laminated onto the barrier layer 3 of the laminate A by a method such as a thermal lamination method or an extrusion lamination method. When the adhesive layer 5 is provided between the barrier layer 3 and the heat-sealable resin layer 4, mention is made of, for example, (1) a method in which the adhesive layer 5 and the heat-sealable resin layer 4 are extruded to be laminated on the barrier layer 3 of the laminate A (extrusion lamination method or tandem lamination method); (2) a method in which the adhesive layer 5 and the heat-sealable resin layer 4 are laminated to form a laminate separately, and the laminate is laminated on the barrier layer 3 of the laminate A by a thermal lamination method, or a method in

which a laminate with the adhesive layer 5 laminated on the barrier layer 3 of the laminate A is formed, and laminated to the heat-sealable resin layer 4 by a thermal lamination method; (3) a method in which the melted adhesive layer 5 is poured between the barrier layer 3 of the laminate A and the heat-sealable resin layer 4 formed in a sheet shape beforehand, and simultaneously the laminate A and the heat-sealable resin layer 4 are bonded to each other with the adhesive layer 5 interposed therebetween (sandwich lamination); and (4) an adhesive for forming the adhesive layer 5 is applied by solution coating and dried or baked to laminate the adhesive on the barrier layer 3 of the laminate A, and the heat-sealable resin layer 4 formed in a sheet shape in advance is laminated on the adhesive layer 5.

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

As described above, a laminate including the surface coating layer 6 provided if necessary, the base material layer 1, the adhesive agent layer 2 provided if necessary, the barrier layer 3, the adhesive layer 5 provided if necessary, and the heat-sealable resin layer 4 in this order is formed, and the laminate may be further subjected to a heating treatment for strengthening the bondability of the adhesive agent layer 2 and the adhesive layer 5 provided if necessary.

In the exterior material for electrical storage devices, the layers forming the laminate may be subjected to surface activation treatment such as corona treatment, blast treatment, oxidation treatment or ozone treatment if necessary to improve processing suitability. For example, by subjecting a surface of the base material layer 1, which is opposite to the barrier layer 3, to a corona treatment, the ink printability of the surface of the base material layer 1 can be improved.

## 4. Uses of Exterior Material for Electrical Storage Devices

The exterior material for electrical storage devices according to the present disclosure is used as a packaging for hermetically sealing and storing electrical storage device elements such as a positive electrode, a negative electrode, and an electrolyte. That is, in a packaging formed of the exterior material for electrical storage devices of the present disclosure, an electrical storage device element including at least a positive electrode, a negative electrode, and an electrolyte can be housed to obtain an electrical storage device.

Specifically, an electrical storage device element including at least a positive electrode, a negative electrode, and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is housed in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element). The heat-sealable resin layers of two exterior materials for electrical storage devices may be superposed in such a manner as to face each other, followed by heat-sealing the peripheral edge portions of the superposed exterior materials for electrical storage devices to form a packaging. Alternatively, as in the example shown in Fig. 5, one exterior material for electrical storage devices may be folded over itself, followed by heat-sealing the peripheral edge portions to form a packaging. When the exterior material is folded over itself, a packaging may be formed by three-side sealing with the exterior material heat-sealed at sides other than the folding side as in the example shown in Fig. 5, or may be subjected to four-side sealing with the exterior material folded in such a manner that a flange portion can be formed. In the exterior material for electrical storage devices, a concave portion for housing an electrical storage device element may be formed by deep drawing molding or bulging molding. As in the example shown in Fig. 5, one exterior material for electrical storage devices may be provided with a concave portion while the other exterior material for electrical storage devices is not provided a concave portion, or the other exterior material for electrical storage devices may also be provided with a concave portion.

The exterior material for electrical storage devices according to the present disclosure can be suitably used for electrical storage devices such as batteries (including condensers, capacitors and the like.). The exterior material for electrical storage devices according to the present disclosure may be used for either primary batteries or secondary batteries, and is preferably used for secondary batteries. The type of a secondary battery to which the exterior material for electrical storage devices according to the present disclosure is applied is not particularly limited, and examples thereof include lithium ion batteries, lithium ion polymer batteries, solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

## EXAMPLES

Hereinafter, the present disclosure will be described in detail by way of examples and comparative examples. However, the present disclosure is not limited to examples.

### [Examples 1 to 4]

<Manufacturing and evaluation of resin film>

A resin film (polyester film) was manufactured and evaluated by the following methods.

(1) Composition of resin

A polyester resin and film were dissolved in hexafluoroisopropanol (HFIP), and the contents of monomer residues and by-product diethylene glycol were quantitatively determined by $^{1}$H-NMR and $^{13}$C-NMR.

(2) Thickness of resin film and thickness of layer

When the thickness of the entire resin film was measured, the film was cut to 200 mm × 300 mm by using a dial gauge, the thickness of each sample was measured at five arbitrary positions, and the average of the measured thicknesses was determined. The thicknesses of the resin film and each layer of the exterior material were determined by embedding a sample in an epoxy resin, cutting a film cross-section with a microtome, and observing the cross-section with a transmission electron microscope (TEMH 7100 manufactured by Hitachi, Ltd.) at a magnification of 5000 times.

(3) Longitudinal direction and width direction of resin film

In the present disclosure, rupture strength was measured in any one direction (0 °) of the film and in directions of 15°, 30°, 45°, 60°, 75°, 90°, 105°, 120°, 135°, 150° and 165 ° from the any one direction of the film, a direction with the highest rupture strength was taken as the width direction, and a direction orthogonal to the width direction was taken as the longitudinal direction. The rupture strength can be obtained by the method shown in "(6) Rupture elongation". In "(6) Rupture elongation", a rectangular sample of 150 mm on the long side and 10 mm on the short side is cut to perform the measurement, and the measurement is performed with the sample cut so as to bring the long side in line with the 12 directions: any one direction (0 °) of the film and 15°, 30°, 45°, 60°, 75°, 90°, 105°, 120°, 135°, 150°, and 165° from the any one direction of the film.

(4) Intrinsic viscosity

The solution viscosity of the resin film was measured in ortho-chlorophenol at 25°C by using an Ostwald viscometer, and the intrinsic viscosity was calculated from the solution viscosity. The intrinsic viscosity is expressed in the unit of [dl/g]. An average value with n = 3 was employed.

(5) Plane orientation coefficient fn of resin film

A layer whose plane orientation coefficient was measured (hereinafter, referred to as a measurement layer) was brought into close contact with a glass surface, refractive indices in the direction a, the direction b and the thickness direction (Nx, Ny, Nz) were then measured with a sodium D ray as a light source by using an Abbe refractometer, and the plane orientation coefficient fn of the measurement layer was determined from the following expression.

$$\text{Plane orientation coefficient fn} = (Nx + Ny)/2 - Nz$$

(6) Rupture elongation

A sample was obtained by cutting the resin film in the longitudinal direction and the width direction to a rectangle having a length of 150 mm and a width of 10 mm. By using a tensile tester (Automatic film strength and elongation measurement apparatus "Tensilon AMF/RTA-100" manufactured by ORIENTEC CO., LTD.), a tensile test is conducted in the longitudinal direction and the width direction of the film at a crosshead speed of 300 mm/min and with a width of 10 mm and a sample length of 50 mm under the conditions of 25°C and 63% Rh, and the value of elongation read at the time of rupture is taken as a rupture elongation. The measurement was performed five times, and the average of the measurements was used.

(7) Crystallinity degree

A differential scanning calorimeter robot DSC-RDC 220 manufactured by Seiko Electronic Industry Co., Ltd. was used, and "Disk Session" SSC/5200 was used for data analysis. In accordance with JIS K 7122 (1999), 5 mg of a resin film sample was heated on an aluminum pan from room temperature to 300°C at a temperature elevation rate of 20°C/min, and held at 300°C for 5 minutes. In accordance with the following expression, the crystallinity degree was calculated from the amount of heat at an endothermic peak ΔHm, the amount of heat in cold-crystallization ΔHc and the amount of heat of fusion ΔHm0 (140.1 J/g) of fully crystalline PET which had been obtained by the measurement.

$$\text{Crystallinity degree (\%)} = (\Delta Hm - \Delta Hc)/\Delta Hm\ 0 \times 100$$

(8) Rigid-amorphous content

In accordance with the following expression, the rigid-amorphous content was calculated from the movable amorphous content and the crystallinity degree which had been obtained by measurement.

$$\text{Rigid-amorphous content (\%)} = 100 - (\text{movable amorphous content} + \text{crystallinity degree}).$$

$$\text{Theoretical value of specific heat difference of fully amorphous polyethylene terephthalate} = 0.4052\ J/(g^\circ C)$$

In the present disclosure, the theoretical value of the specific heat difference of fully amorphous polyethylene terephthalate was referred to.

The movable amorphous content was measured as follows. Using a temperature-modulated DSC manufactured by TA Instruments, measurement was performed on 5 mg of a sample at a temperature elevation rate of 2°C/min from 0°C to 150°C, a temperature modulation amplitude of ± 1°C and a temperature modulation period of 60 seconds in a nitrogen atmosphere. The specific heat difference at a glass transition temperature obtained by the measurement was determined, and calculation was performed from the following formula.

$$\text{Movable amorphous content (\%)} = (\text{specific heat difference})/(\text{theoretical value of specific heat difference of fully amorphous polyester}) \times 100$$

$$\text{Theoretical value of specific heat difference of fully amorphous polyethylene terephthalate} = 0.4052\ J/(g^\circ C)$$

In the present disclosure, the theoretical value of the specific heat difference of fully amorphous polyethylene terephthalate was referred to when the amount of polyethylene terephthalate units was 70 mol% or more.

(9) Glass transition temperature Tg and melting point (melt endothermic peak temperature Tm)

A differential scanning calorimeter (EXSTAR DSC 6220 manufactured by Seiko Instruments Inc.) is used. In accordance with JIS K 7122 (1999), 3 mg of a resin is heated from 30°C to 300°C at 20°C/min in a nitrogen atmosphere. Subsequently, the resin is held at 300°C for 5 minutes, and the temperature is then lowered to 30°C under the condition of 40°C/min. Further, the resin is held at 30°C for 5 minutes, and the temperature is then elevated from 30°C to 300°C under the condition of 20°C/min. The glass transition temperature obtained during the temperature elevation was calculated from the following expression (i).

$$\text{Glass transition temperature} = (\text{extrapolated glass transition start temperature} + \text{extrapolated glass transition end temperature})/2 \qquad \text{(i)}$$

Here, the extrapolated glass transition start temperature is a temperature at an intersection between a straight line obtained by extending a baseline on the low temperature side to the high temperature side and a tangent line drawn at a point where the gradient of a curve of a portion in which glass transition is changed stepwise is maximized. The extrapolated glass transition end temperature is a temperature at an intersection between a straight line obtained by extending a baseline on the high temperature side to the low temperature side and a tangent line drawn at a point where the gradient of a curve of a portion in which glass transition is changed stepwise is maximized. The peak top of an endothermic peak associated with melting of crystals of the resin was taken as a melting point (melt endothermic peak temperature Tm).

(10) (Work-hardening index)

A sample was obtained by cutting the resin film in the longitudinal direction and the width direction to a rectangle having a length of 150 mm and a width of 10 mm. By using a tensile tester (Automatic film strength and elongation measurement apparatus "Tensilon AMF/RTA-100" manufactured by ORIENTEC CO., LTD.), a tensile test is conducted in the longitudinal direction and the width direction of the film at a crosshead speed of 300 mm/min and with a width of 10 mm and a sample length (gauge length) of 50 mm under the conditions of 25°C and 63% Rh. A value obtained from expression (1) is taken as the true strain in elongation by 5%, a value obtained from expression (2) is taken as the true strain in expression by 60%, a value obtained from expression (3) is taken as the true stress in elongation by 5%, and a value obtained from expression (4) is taken as the true stress in elongation by 60%, where $L^0$ is an initial length (mm), $L^1$ is a length (mm) in elongation by 5%, $P^1$ is nominal stress (MPa) in elongation by 5%, $L^2$ is a length (mm) in elongation by 60%, and $P^2$ is nominal stress (MPa) in elongation by 60%. A gradient obtained from an expression formed by plotting true strain on the X-axis and true stress on the Y-axis using the values obtained from (1) to (4) was taken as a work-hardening index. In each of the longitudinal direction and the width direction, the measurement was performed five times, and an average value of the measurements was used.

$$\text{True strain at in elongation by 5\%} = L_n(L^1/L^0) \qquad (1)$$

$$\text{True strain at in elongation by 60\%} = L_n(L^2/L^1) \qquad (2)$$

$$\text{True stress at in elongation by 5\%} = L_n(P^1(1 + L_n(L^1/L^0))) \qquad (3)$$

$$\text{True stress at in elongation by 60\%} = L_n(P^2(1 + L_n(L^2/L^1))) \qquad (4)$$

※$L_n$: Natural logarithm

(11) Heat shrinkage ratio of resin film in longitudinal direction and width direction at 150°C

A sample was obtained by cutting the resin film in the longitudinal direction and the width direction to a rectangle

having a length of 150 mm and a width of 10 mm. Gauge lines were drawn at intervals of 100 mm on the sample, and the sample, from which a 3 g weight was suspended, was placed in a hot air oven heated to 150°C for 30 minutes, thereby performing heat treatment. The gauge length after the heat treatment was measured, and a heat shrinkage ratio was calculated from a change in gauge length before and after the heating to determine the heat shrinkage ratio. The measurement was performed on five samples in the longitudinal direction and the width direction, and an average value of the measurements was used to perform evaluation.

(12) Dynamic friction coefficient of resin film

By using a slip tester manufactured by Toyo Seiki Seisaku-sho, Ltd., a stable region of the resistance value after initial rise when both surfaces of the resin film were overlapped and rubbed was measured in accordance with JIS-K7125 (1999), and taken as a dynamic friction coefficient $\mu d$. The sample was a rectangle having a width of 80 mm and a length of 200 mm, and three sets (six sheets) were cut out from the roll with the cutting direction matching the longitudinal direction of the rectangle. The measurement was performed three times, and an average value of the measurements was determined.

(13) Crease in extrusion lamination

For the 60000 $mm^2$ range cut out from each exterior material obtained by the method described in <Manufacturing of exterior material for electrical storage devices> described later, the appearance was visually observed, and evaluated as follows.

O: Creases were not observed in any part of the film.
△: Creases having a size of less than 5 mm were observed.
×: Creases having a size of 5 mm or more were observed.

(14) Hot water shrinkage ratio of resin film at 95°C

A test piece (10 cm × 10 cm) of a resin film was immersed in hot water at 95°C for 30 minutes, and a size change ratio of the test piece in the stretching direction (shrinkage direction in each of the machine direction and the transverse direction) before and after the immersion was determined from the following expression. The size change ratio is an average value of size change ratios in the machine direction and the transverse direction.

$$\text{Shrinkage ratio (\%)} = \{(X - Y)/X\} \times 100$$

X: Size in stretching direction before immersion treatment
Y: Size in stretching direction after immersion treatment

(15) Stress of resin film in elongation by 10% in tensile test (machine direction and transverse direction)

A sample was stored in an environment at 23°C and 40% RH for 24 hours, a tensile test was then conducted under conditions of a sample width of 6 mm, a gauge length of 35 mm and a tension rate of 300 mm/min in an environment at 23°C and 40% RH, and a stress value in elongation by 10% (displacement of 3.5 mm) was measured.

<Manufacturing of resin film>

For the resin for forming the resin film, which was used for film formation, a main raw material, an auxiliary raw material and a particle master, whose types and proportions are shown in Table 1, were mixed for each example. The main raw material, the auxiliary raw material and the particle master used in each example were provided as follows.

- Polyester A

Polyethylene terephthalate resin containing a terephthalic acid component as a dicarboxylic acid component at 100 mol% and an ethylene glycol component as a glycol component at 100 mol% (intrinsic viscosity: 0.72).

- Polyester B

Polyethylene terephthalate resin containing a terephthalic acid component as a dicarboxylic acid component at 100 mol% and an ethylene glycol component as a glycol component at 100 mol% (intrinsic viscosity: 0.82).

- Polyester C

Polyethylene terephthalate resin containing a terephthalic acid component as a dicarboxylic acid component at 100 mol% and an ethylene glycol component as a glycol component at 100 mol% (intrinsic viscosity: 0.92).

- Polyester D

Polybutylene terephthalate resin containing a terephthalic acid component as a dicarboxylic acid component at 100 mol% and a 1-4, butanediol component as a glycol component at 100 mol% (intrinsic viscosity: 1.2).

- Particle Master A

Polyethylene terephthalate particle master containing aggregated silica particles having an average particle diameter of 1.2 μm in a polyester A at a particle concentration of 2 mass%.

(Coating agent A)

- Acrylic resin having a copolymer composition of methyl methacrylate/ethyl acrylate/acrylic acid/N-methylol acrylamide = 63/35/1/1 mass%: 3.00 mass%
- Melamine crosslinking agent: 0.75 mass%
- Colloidal silica particles (average particle diameter: 80 nm): 0.15 mass%
- Hexanol: 0.26 mass%
- Butyl cellosolve: 0.18 mass%
- Water: 95.66 mass%

An extruder was used. The polyester species and the particle master shown in Table 1 were each dried at 180°C for 4 hours with a vacuum dryer to sufficiently remove moisture, and the main raw material, the auxiliary-raw material and the particle master were then put in the extruder in the manner described in Table 1, and were melted at 280°C. Subsequently, the resin melt-extruded from the extruder was cooled to solidify on a cast drum cooled to 25°C, thereby obtaining an unstretched sheet. At this time, the distance between the lip of the T die and the cooling drum was set to 35 mm, and electrostatic application was performed at a voltage of 14 kV by using a wire-shaped electrode having a diameter of 0.1 mm, so that the film was brought into close contact with the cooling drum. The passage speed of the unstretched sheet over the cooling drum was 25 m/min, and the contact length between the unstretched sheet and the cooling drum was 2.5 m.

Subsequently, the unstretched sheet was preheated with a group of rolls heated to a temperature shown in Table 2, was then stretched in the longitudinal direction (vertical direction) at a ratio shown in Table 2 by using heating rolls controlled to have a temperature shown in Table 2, and was cooled with a group of rolls at a temperature of 25°C to obtain a uniaxially stretched film. The uniaxially stretched film was subjected to a corona discharge treatment in air, the coating agent A was mixed as an anchor coat layer on the treated surface while being ultrasonically dispersed, and with a # 4 metering bar, the coating agent A was uniformly applied to the surface bonded to the cast to perform surface treatment. Subsequently, in the tenter, the uniaxially stretched film was guided to a preheating zone controlled to have a temperature shown in Table 2 while being grasped at its both ends with grips, and successively, in a heating zone maintained at a temperature shown in Table 2, the film was stretched in a direction perpendicular to the longitudinal direction (width direction) at a ratio shown in Table 2. Further, subsequently, in the heat treatment zone in the tenter, heat treatment was performed for 20 seconds at a heat treatment temperature shown in Table 2, and a relaxation treatment was performed at a relaxation temperature shown in Table 2 at a relaxation ratio shown in Table 2. Subsequently, the film was uniformly and slowly cooled to obtain a resin film having a thickness shown in Table 1 (25 μm or 12 μm). The characteristics of the resin film are as shown in Tables 3 and 4.

<Manufacturing of exterior material for electrical storage devices>

In Examples 1 to 3, a resin film (thickness: 25 μm) obtained by the above-described method was used as a base material layer, and an exterior material for electrical storage devices was manufactured by the following procedure. In each of Examples 1 to 4, a commercially available biaxially stretched polyethylene terephthalate film (thickness: 25 μm) having characteristics shown in Table 3 was used as a base material layer, and an exterior material for electrical storage devices was manufactured by the following procedure. Each resin film (PET, thickness: 25 μm) as a base material layer and an aluminum foil (JIS H 4160: 1994 A 8021 H-O, thickness: 40 μm) having a corrosion resistance film formed on each of both surfaces, as a barrier layer were provided. Next, using a two-liquid curable urethane adhesive (polyol compound and aromatic isocyanate compound), a base material layer and a barrier layer were laminated by a dry lamination method, and aging treatment was performed to prepare a laminate of base material layer (thickness: 25 μm)/adhesive agent layer (thickness after curing: 3 μm)/barrier layer (thickness: 40 μm).In Example 4, a laminated film (PET/ONy) obtained by laminating a resin film (polyethylene terephthalate film, thickness: 12 μm) obtained by the above-described method and a stretched nylon film (thickness: 15 μm) with a two-liquid curable urethane adhesive (polyol compound and aromatic isocyanate compound, thickness after curing: 3 μm) was used as a base material layer, and an exterior material for electrical storage devices was manufactured by the following procedure. A laminated film (PET/ONy) as a base material layer and an aluminum foil (JIS H 4160: 1994 A 8021 H-O, thickness: 40 μm) having a corrosion resistance film formed on each of both surfaces, as a barrier layer were provided. Next, using a two-liquid curable urethane adhesive (polyol compound and aromatic isocyanate compound), a base material layer on the ONy side and a barrier layer were laminated by a dry lamination method, and aging treatment was performed to prepare a laminate of base material layer (thickness: 30 μm)/adhesive agent layer (thickness after curing: 3 μm)/barrier layer (thickness: 40 μm).

Next, maleic anhydride-modified polypropylene (PPa, thickness: 40 μm) as an adhesive layer and polypropylene (PP, thickness: 40 μm) as a heat-sealable resin layer were co-extruded onto the barrier layer of the obtained laminate to laminate an adhesive layer and a heat-sealable resin layer on the barrier layer. Next, the obtained laminate was aged to obtain an exterior material for electrical storage devices with a resin film, an adhesive agent layer, a barrier layer, an adhesive layer and a heat-sealable resin layer laminated in the stated order.

Erucic acid amide was applied as a slipping agent to the outer surface of the base material layer of each exterior material for electrical storage devices.

<Evaluation of moldability>

The exterior material for electrical storage devices was cut into a rectangle having a length of 90 mm (MD (Machine Direction)) and a width of 150 mm (TD (Transverse Direction)) to obtain a test sample. Using a rectangular mold having an opening size having of 31.6 mm (machine direction) × 54.5 mm (TD) (female surface has a surface roughness in maximum height (nominal value of Rz) of 3.2 μm as specified in Appendix 1 (Reference) of JIS B 0659-1: 2002, Comparative Surface Roughness Standard Specimen, Table 2; corner R: 2.0 mm; ridge line R: 1.0 mm) and a corresponding mold (male surface has a surface roughness in maximum height (nominal value of Rz) of 1.6 μm as specified in Appendix 1 (Reference) of JIS B 0659-1: 2002, Comparative Surface Roughness Standard Specimen, Table 2; corner R: 2.0 mm; ridge line R: 1.0 mm), the sample was subjected to cold molding (draw molding in one stage) while the molding depth was changed by units of 0.5 mm from a molding depth of 0.5 mm under a pressing force (surface pressure) of 0.25 MPa. This procedure was carried out for 10 samples at each depth. At this time, the molding was performed with the test sample placed on the female mold so that the heat-sealable resin layer was located on the male mold side. The male mold and the female mold had a clearance of 0.3 mm. The molding was performed in an environment of 25°C. For the sample after cold molding, light was applied with a penlight in a dark room, and whether or not pinholes or cracks were generated in the aluminum alloy foil was checked on the basis of transmission of light. The deepest of depths at which none of the 10 samples has pinholes and cracks in the aluminum alloy foil was taken as A mm, and the number of samples having pinholes etc. at the shallowest of depths where pinholes etc. were generated in the aluminum alloy foil was taken as B. The value calculated from the following equation was rounded off to one decimal place, and the resulting value was taken as a limit molding depth of the exterior material for electrical storage devices. Four-grade evaluation was performed on the basis of the following criteria of depth. Table 3 shows the results.

$$\text{Limit molding depth} = \text{A mm} + (0.5\ \text{mm}/10\ \text{pieces}) \times (10\ \text{pieces} - \text{B pieces})$$

(Evaluation criteria for moldability)

S: The limit molding depth is 6.5 mm or more.
A: The limit molding depth is 6.0 mm or more and less than 6.5 mm.
B: The limit molding depth is 5.0 mm or more and less than 6.0 mm.
C: The limit molding depth is 4.5 mm or more and less than 5.0 mm.
D: The limit molding depth is less than 4.5 mm.

(Evaluation of curling)

The exterior material for electrical storage devices obtained as described above was cut to prepare a strip piece of 150 mm in TD and 90 mm in MD, and the strip piece was used as a test sample. The test sample was curled by heating in the manufacturing process or the like. Next, 100 mm-long cuts were made on diagonal lines so as to have a center at the intersection of the diagonal lines of the test sample (the cut was made so as to form a cross mark shape). Next, the test sample was left standing in a dry room for 8 hours. Next, the test sample is placed on a horizontal plane with the heat-sealable resin layer on the lower side, and a weight is placed on the end part of the test sample so that the cut portion rises. The maximum value of a distance between the horizontal plane and the endmost part in a vertical direction was taken as a maximum height of a curled portion. The evaluation criteria for curling are as follows. Table 3 shows the results.

A: The curl height is less than 1.0 mm.

B: The curl height is 1.0 mm or more and less than 5.0 mm.

C: The curl height is 5.0 mm or more.

[Table 1]

<table>
<tr><th rowspan="3"></th><th colspan="9">Resin film</th></tr>
<tr><th rowspan="2">Main raw material</th><th rowspan="2">Auxiliary raw material</th><th rowspan="2">Particle master species</th><th colspan="3">Mixing ratio of each resin (mass%)</th><th rowspan="2">Melting point Tm [°C]</th><th rowspan="2">Glass transition temperature Tg [°C]</th><th rowspan="2">Thickness [μm]</th></tr>
<tr><th>Main raw material</th><th>Auxiliary raw material</th><th>Particle master species</th></tr>
<tr><td>Example 1</td><td rowspan="3">Polyester A</td><td rowspan="3">-</td><td rowspan="3">Particle master A</td><td rowspan="3">98</td><td rowspan="3">0</td><td rowspan="3">2</td><td rowspan="3">255</td><td rowspan="3">82</td><td rowspan="3">25</td></tr>
<tr><td>Example 2</td></tr>
<tr><td>Example 3</td></tr>
<tr><td>Example 4</td><td>Polyester A</td><td>-</td><td>Particle master A</td><td>98</td><td>0</td><td>2</td><td>255</td><td>82</td><td>12</td></tr>
</table>

[Table 2]

<table>
<tr><th rowspan="3"></th><th colspan="10">Condition for formation of resin film</th></tr>
<tr><th colspan="3">Draw ratio of resin film</th><th colspan="2">Film preheating temperature</th><th colspan="2">Film stretching temperature</th><th rowspan="2">Heat treatment temperature [°C]</th><th rowspan="2">Relaxation temperature [°C]</th><th rowspan="2">Relaxation ratio [%]</th></tr>
<tr><th>Longitudinal direction [ratio]</th><th>Width direction [ratio]</th><th>Area ratio</th><th>Longitudinal direction [°C]</th><th>Width direction [°C]</th><th>Longitudinal direction [°C]</th><th>Width direction [°C]</th></tr>
<tr><td>Example 1</td><td rowspan="3">3.8</td><td rowspan="3">3.6</td><td rowspan="3">13.68</td><td rowspan="3">78</td><td rowspan="3">80</td><td rowspan="3">84</td><td rowspan="3">90</td><td>190</td><td>190</td><td rowspan="3">3</td></tr>
<tr><td>Example 2</td><td>170</td><td>170</td></tr>
<tr><td>Example 3</td><td>220</td><td>220</td></tr>
<tr><td>Example 4</td><td>3.8</td><td>3.6</td><td>13.68</td><td>78</td><td>80</td><td>84</td><td>90</td><td>200</td><td>200</td><td>3</td></tr>
</table>

[Table 3]

| | Characteristics of resin film | | | Characteristics of exterior material for electrical storage devices | |
|---|---|---|---|---|---|
| | Stress in elongation by 10% [MPa] | | Shrinkage ratio in hot water at 95°C [%] | | |
| | MD | TD | | Moldability | Curl |
| Example 1 | 140.1 | 141.5 | 2.57 | S | A |
| Example 2 | 146.8 | 141.2 | 3.63 | S | A |
| Example 3 | 128.4 | 115.5 | 1.88 | A | A |
| Example 4 | 131.0 | 115.1 | 1.00 | S | A |
| Comparative Example 1 | 80.5 | 83.4 | 1.56 | S | B |
| Comparative Example 2 | 90.0 | 95.0 | 2.00 | D | B |
| Comparative Example 3 | 98.0 | 100.0 | 5.00 | D | c |
| Comparative Example 4 | 108.4 | 105.6 | 0.40 | D | A |

[Table 4]

| | Characteristics of resin film | | | | | | | | | | | | | |
|---|---|---|---|---|---|---|---|---|---|---|---|---|---|---|
| | Intrinsic viscosity of film [dl/g] | Plane orientation coefficient | Work-hardening index | | | Rupture elongation [%] | | Heat shrinkage ratio at 150°C [%] | | Crystallinity degree [%] | Movable amorphous content [%] | Rigid-amorphous content [%] | Crease in extrusion lamination | Dynamic friction coefficient |
| | | | Longitudinal direction | Width direction | Difference between longitudinal direction and width direction | Longitudinal direction | Width direction | Longitudinal direction | Width direction | | | | | |
| Example 1 | 0.70 | 0.167 | 2.8 | 2.5 | 0.3 | 120 | 145 | 5.5 | 4.5 | 25.0 | 33.0 | 42.0 | ○ | 0.34 |
| Example 2 | 0.70 | | | | | 112 | 146 | 13.2 | 12.1 | 16.5 | 32.8 | 50.7 | × | 0.34 |
| Example 3 | 0.67 | | | | | 120 | 135 | 2.0 | 2.2 | 38.5 | 32.5 | 29.0 | × | 0.34 |
| Example 4 | 0.70 | 0.167 | 2.4 | 1.9 | 0.5 | 110 | 142.1 | 4.3 | 3.6 | 32 | 31 | 37 | ○ | 0.34 |

As described above, the present disclosure provides the invention of aspects as shown below.

Item 1. An exterior material for electrical storage devices including a laminate including at least a base material layer, a barrier layer and a heat-sealable resin layer in this order, the base material layer including a resin film,

the resin film having a shrinkage ratio of 1.0% or more and less than 5.0% when immersed in hot water at 95°C for 30 minutes,

the resin film having a stress value of 100 MPa or more in both a machine direction and a transverse direction when stretched by 10% in the following tensile test: (tensile test)

a sample is stored in an environment at 23°C and 40% RH for 24 hours, a tensile test is then conducted under conditions of a sample width of 6 mm, a gauge length of 35 mm and a tension rate of 300 mm/min in an environment at 23°C and 40% RH, and a stress value in stretching by 10% (displacement of 3.5 mm) is measured.

Item 2. The exterior material for electrical storage devices according to item 1, in which a thickness of the resin film is 5 μm or more and 40 μm or less.

Item 3. The exterior material for electrical storage devices according to item 1 or 2, in which the resin film has a work-hardening index of 1.6 or more and 3.0 or less in both a longitudinal direction and a width direction, and a difference in work-hardening index between the longitudinal direction and the width direction is 0.5 or less.

Item 4. The exterior material for electrical storage devices according to any one of items 1 to 3, in which the resin film has an intrinsic viscosity of 0.66 or more and 0.95 or less.

Item 5. The exterior material for electrical storage devices according to any one of items 1 to 4, in which the resin film has a rigid-amorphous content of 28% or more and 60% or less.

Item 6. The exterior material for electrical storage devices according to any one of items 1 to 5, in which the resin film has a melting point of 235°C or higher.

Item 7. The exterior material for electrical storage devices according to any one of items 1 to 6, in which a crystallinity degree of the resin film is 15% or more and 40% or less.

Item 8. The exterior material for electrical storage devices according to any one of items 1 to 7, in which a rupture elongation of the resin film in at least one of the longitudinal direction and the width direction is 100% or more.

Item 9. An electrical storage device in which an electrical storage device element including at least a positive electrode, a negative electrode and an electrolyte is housed in a packaging formed of the exterior material for electrical storage devices according to any one of items 1 to 8.

Item 10. A method for manufacturing an exterior material for electrical storage devices, the method including the step of laminating at least a base material layer, a barrier layer and a heat-sealable resin layer in this order to obtain a laminate,

the base material layer including a resin film,

the resin film having a shrinkage ratio of 1.0% or more and less than 5.0% when immersed in hot water at 95°C for 30 minutes,

the resin film having a stress value of 100 MPa or more in both a machine direction and a transverse direction when stretched by 10% in the following tensile test: (tensile test)

a sample is stored in an environment at 23°C and 40% RH for 24 hours, a tensile test is then conducted under conditions of a sample width of 6 mm, a gauge length of 35 mm and a tension rate of 300 mm/min in an environment at 23 °C and 40% RH, and a stress value in stretching by 10% (displacement of 3.5 mm) is measured.

DESCRIPTION OF REFERENCE SIGNS

1: Base material layer
2: Adhesive agent layer
3: Barrier layer
4: Heat-sealable resin layer
5: Adhesive layer
6: Surface coating layer
10: Exterior material for electrical storage devices

## Claims

1. An exterior material for electrical storage devices comprising a laminate including at least a base material layer, a barrier layer and a heat-sealable resin layer in this order, the base material layer including a resin film,

the resin film having a shrinkage ratio of 1.0% or more and less than 5.0% when immersed in hot water at 95°C for 30 minutes,
the resin film having a stress value of 100 MPa or more in both a machine direction and a transverse direction when stretched by 10% in the following tensile test: (tensile test)
a sample is stored in an environment at 23°C and 40% RH for 24 hours, a tensile test is then conducted under conditions of a sample width of 6 mm, a gauge length of 35 mm and a tension rate of 300 mm/min in an environment at 23°C and 40% RH, and a stress value in stretching by 10% (displacement of 3.5 mm) is measured.

2. The exterior material for electrical storage devices according to claim 1, wherein a thickness of the resin film is 5 μm or more and 40 μm or less.

3. The exterior material for electrical storage devices according to claim 1 or 2, wherein the resin film has a work-hardening index of 1.6 or more and 3.0 or less in both a longitudinal direction and a width direction, and a difference in work-hardening index between the longitudinal direction and the width direction is 0.5 or less.

4. The exterior material for electrical storage devices according to any one of claims 1 to 3, wherein the resin film has an intrinsic viscosity of 0.66 or more and 0.95 or less.

5. The exterior material for electrical storage devices according to any one of claims 1 to 4, wherein the resin film has a rigid-amorphous content of 28% or more and 60% or less.

6. The exterior material for electrical storage devices according to any one of claims 1 to 5, wherein the resin film has a melting point of 235°C or higher.

7. The exterior material for electrical storage devices according to any one of claims 1 to 6, wherein a crystallinity degree of the resin film is 15% or more and 40% or less.

8. The exterior material for electrical storage devices according to any one of claims 1 to 7, wherein a rupture elongation of the resin film in at least one of the longitudinal direction and the width direction is 100% or more.

9. An electrical storage device in which an electrical storage device element comprising at least a positive electrode, a negative electrode, and an electrolyte is housed in a packaging formed of the exterior material for electrical storage devices according to any one of claims 1 to 8.

10. A method for manufacturing an exterior material for electrical storage devices, the method comprising the step of laminating at least a base material layer, a barrier layer and a heat-sealable resin layer in this order to obtain a laminate,

the base material layer including a resin film,
the resin film having a shrinkage ratio of 1.0% or more and less than 5.0% when immersed in hot water at 95°C for 30 minutes,
the resin film having a stress value of 100 MPa or more in both a machine direction and a transverse direction when stretched by 10% in the following tensile test: (tensile test)
a sample is stored in an environment at 23°C and 40% RH for 24 hours, a tensile test is then conducted under conditions of a sample width of 6 mm, a gauge length of 35 mm and a tension rate of 300 mm/min in an environment at 23 °C and 40% RH, and a stress value in stretching by 10% (displacement of 3.5 mm) is measured.

FIG. 1

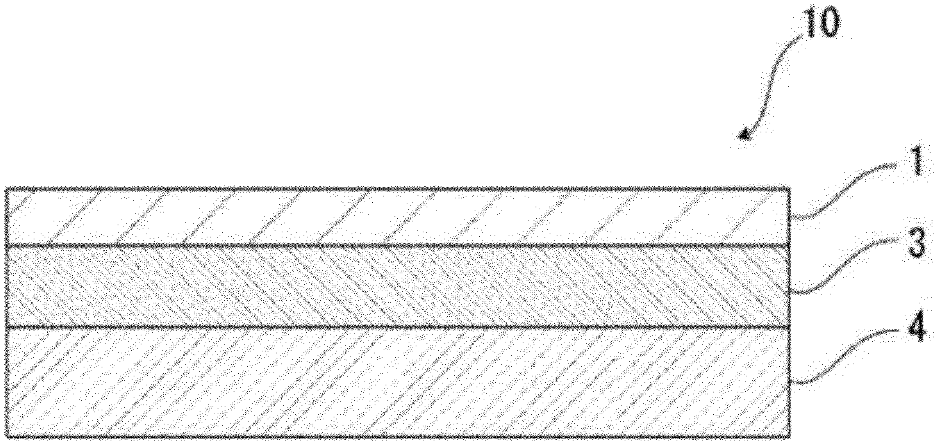


FIG. 2

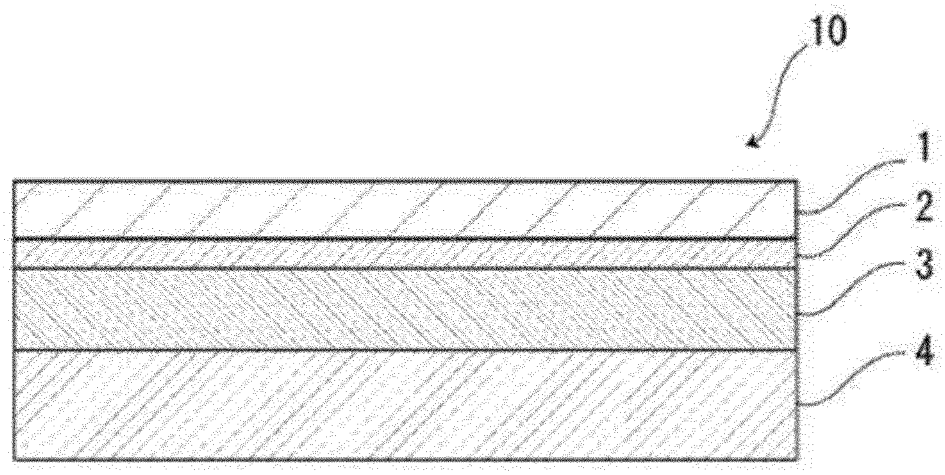


FIG. 3

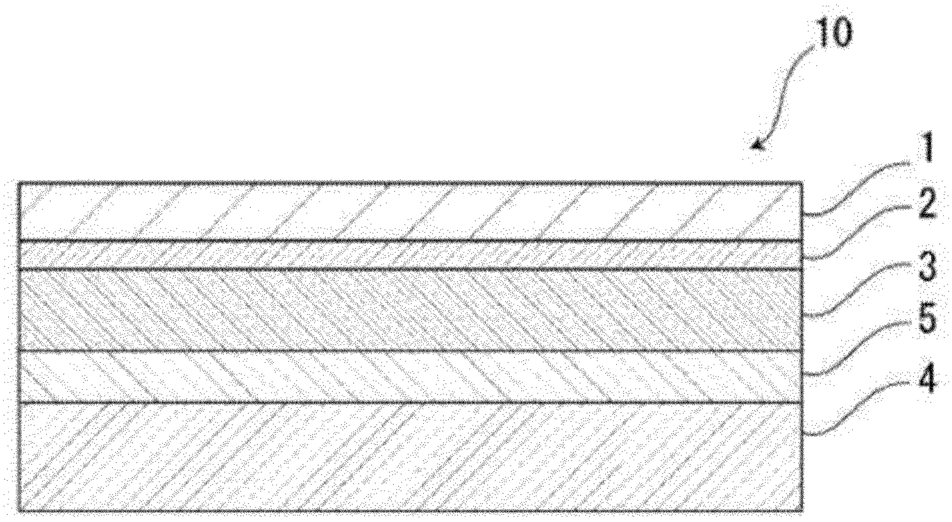

FIG. 4

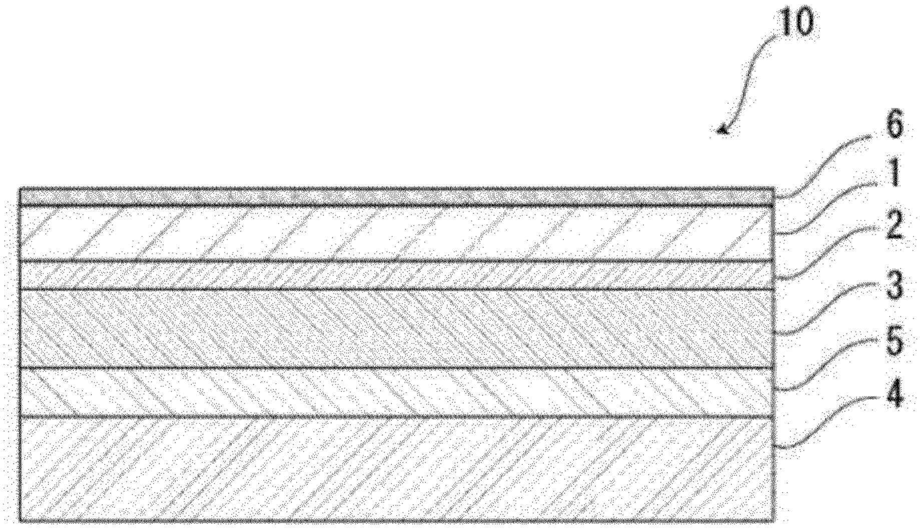


FIG. 5

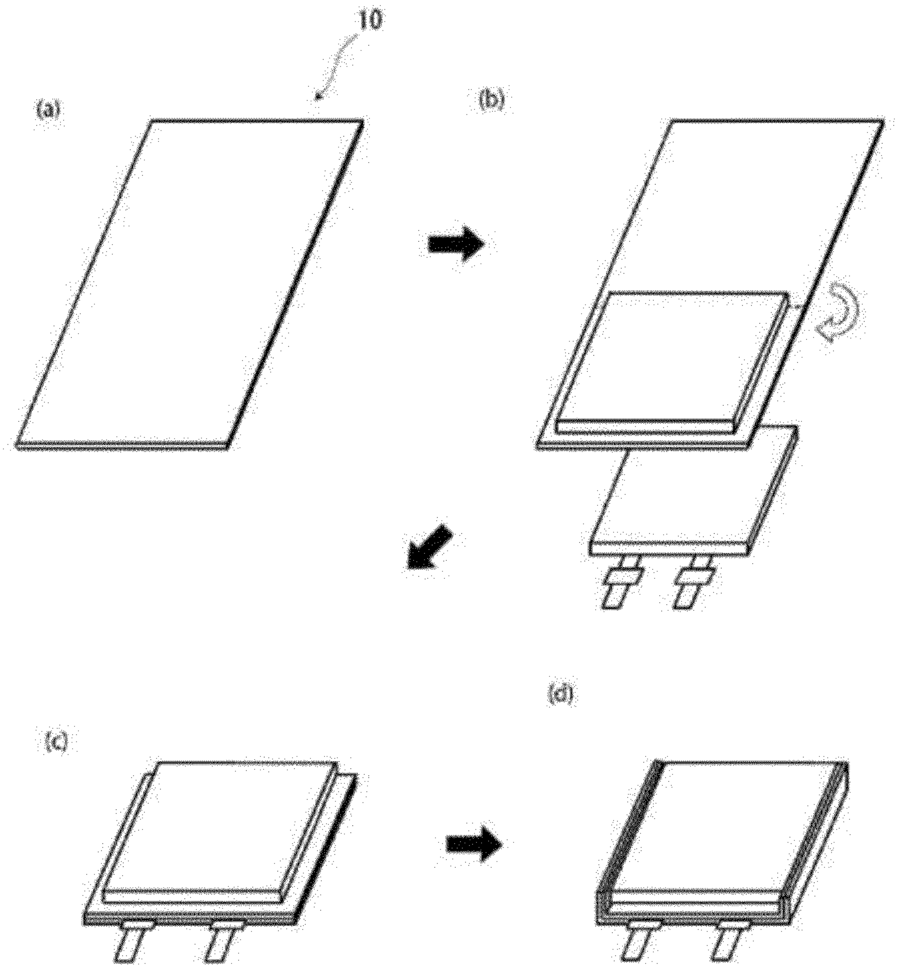

## INTERNATIONAL SEARCH REPORT

International application No.
**PCT/JP2021/036343**

**A. CLASSIFICATION OF SUBJECT MATTER**

***H01M 50/121***(2021.01)i; ***B32B 7/022***(2019.01)i; ***H01G 11/78***(2013.01)i; ***H01M 50/105***(2021.01)i; ***H01M 50/129***(2021.01)i
FI: H01M50/121; B32B7/022; H01G11/78; H01M50/129; H01M50/105

According to International Patent Classification (IPC) or to both national classification and IPC

**B. FIELDS SEARCHED**

Minimum documentation searched (classification system followed by classification symbols)

H01M50/121; B32B7/022; H01G11/78; H01M50/105; H01M50/129

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-162622 A (TOPPAN PRINTING CO LTD) 05 September 2016 (2016-09-05) | 1-10 |
| A | JP 2019-217726 A (SHOWA DENKO PACKAGING CO LTD) 26 December 2019 (2019-12-26) | 1-10 |
| A | JP 2015-131888 A (TORAY INDUSTRIES) 23 July 2015 (2015-07-23) | 1-10 |
| A | JP 2017-177412 A (TORAY INDUSTRIES) 05 October 2017 (2017-10-05) | 1-10 |
| A | WO 2017/170333 A1 (TOYOBO CO., LTD.) 05 October 2017 (2017-10-05) | 1-10 |
| A | JP 2014-233950 A (TORAY INDUSTRIES) 15 December 2014 (2014-12-15) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2021** | **09 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/036343**

| Patent document cited in search report | Publication date (day/month/year) | Patent family member(s) | Publication date (day/month/year) |
|---|---|---|---|
| JP 2016-162622 A | 05 September 2016 | US 2017/0365825 A1<br>WO 2016/140256 A1<br>EP 3267506 A1<br>KR 10-2017-0125047 A<br>CN 107408642 A | |
| JP 2019-217726 A | 26 December 2019 | CN 110626026 A | |
| JP 2015-131888 A | 23 July 2015 | (Family: none) | |
| JP 2017-177412 A | 05 October 2017 | (Family: none) | |
| WO 2017/170333 A1 | 05 October 2017 | TW 201806211 A | |
| JP 2014-233950 A | 15 December 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008287971 A